(19) Europäisches Patentamt

European Patent Office

Office européen des brevets

(11) EP 1 659 027 A1

(12) EUROPEAN PATENT APPLICATION

(43) Date of publication:
24.05.2006 Bulletin 2006/21

(51) Int Cl.:
B60Q 1/00 (2006.01)
G02B 6/00 (2006.01)
F21V 14/06 (2006.01)
F21V 8/00 (2006.01)
F21S 8/12 (2006.01)

(21) Application number: 06002035.1

(22) Date of filing: 09.12.1998

(84) Designated Contracting States:
DE ES FR GB IT

(30) Priority: 09.12.1997 US 69118 P
20.01.1998 US 9836
20.04.1998 US 62766
02.07.1998 US 109051
02.07.1998 US 109052
26.08.1998 US 140281
10.09.1998 US 150672
21.09.1998 US 157373
09.10.1998 US 168890

(62) Document number(s) of the earlier application(s) in
accordance with Art. 76 EPC:
98965382.9 / 1 066 172

(71) Applicant: Federal-Mogul Ignition Company
Southfield,
Michigan 48034 (US)

(72) Inventors:
• Hulse, George, R.
Cookeville, TN 38506 (US)
• Bucher, Lloyd, Keith
Cookeville, TN 38501 (US)
• Anderson, James, Burr
Cookeville, TN 38506 (US)
• Woodward, Ronald, O.
Yorktown, VA 23693 (US)
• Young, Joe, P.
Sparta, TN 38583 (US)

(74) Representative: Ajello, Michael John et al
Harrison Goddard Foote,
Orlando House,11c Compstall Road,
Marple Bridge
Stockport SK6 5HH (GB)

Remarks:
This application was filed on 01 - 02 - 2006 as a
divisional application to the application mentioned
under INID code 62.

(54) **Optical waveguide structures for vehicle lighting**

(57) A distributed lighting system (DLS) may be used, for example, in an automobile. The DLS employs inexpensive focusless optic components, such as collector elements and waveguides, which have high collecting efficiency and are very compact. Headlamp high beams, headlamp low beams, and stop lights may be implemented using hybrid lighting subsystems that combine a conventional optical system, such as a headlamp, with components that receive light from the headlamp and transmit the light through waveguides or fiber optics to provide other lighting functions throughout the vehicle. For example, the headlamp subsystems may be light sources for other exterior lights, such as front turn signals and side markers, as well as interior lights, such as dashboard lights and dome lights. These other lights may be connected to the headlamp subsystems by optical waveguides. Similarly, the tail light subsystems provide light for rear turn signals and a center high mounted stop light. The subsystems of the DLS are interconnected so that the light source of one subsystem serves as a redundant light source for another subsystem. A headlamp can comprise a beam forming waveguide (405) positioned between a light source (205) and a lens (415).

FIG. 6

**EP 1 659 027 A1**

**Description**

Technical Field

The,invention relates to distributed lighting systems.

Background

Distributed lighting systems distribute light from one or more light sources in central locations to one or more remote locations. A distributed lighting system promises several advantages over conventional lighting techniques, including low power consumption, extended life, heat reduction where the light is emitted, and increased design flexibility.

Summary

The invention provides a distributed lighting system (DLS) for use, for example, in an automobile, and components of such a system. Issues associated with incorporating a distributed lighting system into an automobile are discussed by Hulse, Lane, and Woodward in "Three Specific Design Issues Associated with Automotive Distributed Lighting Systems: Size, Efficiency and Reliability," SAE Technical Paper Series, Paper No. 960492, which was presented at the SAE International Congress and EXposition, Detroit, MI, February 26-29, 1996, and Hulse and Mullican in "Analysis of Waveguide Geometries at Bends and Branches for the Directing of Light," SAE Technical Paper Series, Paper No. 981189.

A practical distributed lighting system for an automobile must address size, efficiency, and reliability issues. To this end, a DLS may employ focus-less optics components, such as collector elements and waveguides. These components are inexpensive to manufacture, since they can be formed from plastic (acrylic, for example) in an injection molding process. In addition, they have high collecting efficiency and are very compact. For example, a collector element may be smaller than one cubic inch (16.4 cubic centimeters). Components that must handle high heat levels (e.g., components that are placed in proximity to the light source) may require a ventilation system or may include portions formed from heat resistant materials, such as glass or Pyrex™.

The three most demanding lighting functions in automotive illumination systems are headlamp high beams, headlamp low beams, and stop lights. These functions may be implemented using a centralized light source having waveguide outputs that transmit the light to the appropriate output points on the vehicle (i.e., the headlamps and stop lights) and form beam patterns at each output location. However, inefficiencies in the light distribution components may make such a configuration impractical. One solution to this problem is to form a hybrid lighting subsystem by combining a conventional optical system, such as a headlamp, with components that receive light from the headlamp and transmit the light through waveguides or fiber optics to provide other lighting functions throughout the vehicle.

Four hybrid lighting subsystems, each including a high intensity discharge (HID) source, should provide enough light for an entire automobile. Other systems may require additional HID sources. The HID source acts as a primary light source for a particular lighting function, such as a headlamp. In addition, the HID acts as a light source for other lighting functions throughout the vehicle. Light sources other than a HID source, such as high intensity infrared (HIR), halogen, cartridge bulbs, printed circuit (PC) bulbs, and other gas discharge and incandescent bulbs, may be used. The hybrid subsystem may employ focus-less optics to receive and transmit light from the light source. Focus-less optics components include optical waveguides and collector elements, such as are described below and in U.S. Patent Nos. 5,791,756, entitled "Distributed Lighting System" and 5,812,714, entitled "Optical Waveguide Elements for a Distributed Lighting System".

A vehicle distributed lighting system may include hybrid headlamp subsystems, turn signal subsystems, and hybrid tail light subsystems. The hybrid headlamp subsystems may provide primary forward illumination for the vehicle. The headlamp subsystems may be light sources for other exterior lights, such as front turn signals of the subsystems and side markers, as well as interior lights, such as dashboard lights and dome lights. These other lights may be connected to the headlamp subsystems by optical waveguides. Similarly, the tail light subsystems provide light for rear turn signals and a center high mounted stop light. The subsystems of the DLS are interconnected so that the light source of one subsystem serves as a redundant light source for another subsystem.

A hybrid headlamp subsystem may include a light source. The light source may be a high-intensity discharge (HID) lamp. Light produced by the light source may be collected by a reflector and directed through a lens to provide the primary forward illumination for the vehicle. The hybrid headlamp subsystem may provide both high beam and low beam illumination. The subsystem may employ a number of different beam forming techniques, such as a fresnel lens that is moved by an actuator between a high beam position and a low beam position.

A solid molded plastic form or a bundle of plastic or glass fibers may be used to generate a desired headlamp beam pattern. The shape of the output end of the solid form or bundles, in conjunction with the properties of the focusing lens, may determine the beam pattern in the far field. The shape of the input end of the solid form may be configured to act as a collector element to receive light from a light source.

A reflector may also be used to control the beam pattern. A lens maybe moved to shift the hot spot of the beam between high beam and low beam positions.

A diffraction grating may be used to control the beam pattern of the headlamp or other lighting functions, such as stop lights and turn signals. The diffraction grating may include essentially transparent material that has a series of ridges on its surface. The width of the ridges may be approximately equal to the wavelength of the light produced by the light source. A portion of the light passing through the diffraction grating may be reflected back into the light source, depending upon the exit angle of the light ray. Most of the light travelling in a direction close to perpendicular may pass through the grating undisturbed. The grating may be used alone or in conjunction with lenses, solid forms or fiber bundles to provide a desired headlamp beam pattern.

The light source of the hybrid headlamp subsystem may act as a light source for other parts of the system. Waveguides having collector elements at their ends may be positioned close to the light source to receive light and transmit the light to other locations in the vehicle, such as to provide turn signals, interior lighting, fog lights, or side markers. The waveguides may also carry light to other lighting subsystems to provide redundancy, such as the opposite side headlamp or the tail lights. The number of collector elements may be increased as necessary to supply light to other lighting functions. The collector elements may be glass rods (such as Pyrex™ rods) with ends that are polished so as to be faceted or pinched to increase the acceptance:angle of the collector element.

A waveguide may carry light from the headlamp subsystem light source to a side marker light. The waveguide may include colored plastic filters to provide a desired output color (e.g., amber) for the side marker. Another waveguide may provide light to the turn signal subsystem. The turn signal subsystem may include an independent light source and may use the input from the headlamp subsystem for redundancy.

The turn signal subsystem may use an electromechanical shutter or a liquid crystal light valve (LCLV) to modulate the light produced by the turn signal. A plastic colored filter may provide amber color for the turn signal. The electromechanical modulator may include an opaque shutter that is moved between an ON and OFF position by a solenoid. In the ON position, the shutter is moved away from the illumination path, so that essentially all of the light is transmitted. In the OFF position, the shutter blocks the illumination path so that no light is transmitted. The electromechanical modulator may be used with an amber-colored plastic filter to provide a desirable aesthetic effect (i.e., the turn signal appears amber when ON but has no color when OFF).

The LCLV may have two states. In the OFF state the LCLV may reflect or scatter most of the incident light. In the ON state the LCLV may become largely transparent (i.e., greater than 80% of the incident light may pass through). The ratio of the light transmitted in the ON state relative to the light transmitted in the OFF state (i.e., the contrast ratio) may be approximately 5:1. An infrared reflecting mirror may be used to shield the LCLV from infrared energy from the source to increase the expected life of the LCLV. LCLV modulators may be combined with diffraction gratings to improve the contrast ratio and achieve a desired beam pattern. The diffraction grating may lessen the amount of forward scattered light that is emitted. Focusing optics, such as lenses, may also be used to provide further beam pattern control.

Waveguides may carry light from the headlamp subsystem to other subsystems having their own light sources, such as the opposite headlamp subsystem or the corresponding tail light subsystem, to provide light source redundancy. When redundancy is employed and, for example, one of the headlamps fails, light from the operational headlamp will dimly illuminate the failed headlamp. Redundancy also may be used to reduce the effects of failure of other lighting components. An incandescent PC bulb may be used as a source for trunk lighting and may be connected to provide redundancy to interior reading lights. A tail light subsystem may include a light source that provides primary rear illumination through a lens. The light source may be a HID lamp or another type of lighting source, such as an incandescent lamp.

Waveguide collector elements in the tail light subsystem may be positioned close to the source to receive light and transmit the light to other lighting elements, such as the rear turn'signals, backup lights, and center high-mounted stop light (CHMSL). A combination stop/rear turn signal light may be modulated with a LCLV. The backup lights and CHMSL may be modulate with electromechanical shutters.

A waveguide section may be used to provide a desired beam pattern for the rear turn signal. Light from a collector element or an independent light source may be received at the input of the waveguide section and internally reflected by the surfaces of the waveguide as it propagates. The waveguide may include a bend immediately prior to the output. The outer surface of the bend may be s-shaped to change the distribution of light across the output surface and the far field beam pattern of the turn signal.

A vehicle headlamp may include a beamforming waveguide formed from a block of solid material. The waveguide has an input face, an output face, and a guide portion extending between the input face and the output face. A light source is positioned at the input face of the beamforming waveguide. A lens is positioned at the output face so that light output by the beamforming waveguide passes through the lens to provide vehicle forward illumination.

The guide portion may have a uniform cross-section along a length of the guide portion from the input face to the output face. The guide portion may include a top surface having a first stepped portion that forms a thickness profile to control an output beam pattern of the waveguide. The guide portion also may include a second stepped portion and an inclined portion that forms a transition between the first stepped portion and the second stepped portion. The input and output faces of the waveguide may be planar surfaces and the stepped portions may be perpendicular to the input face and the output face.

The guide portion also may include a planar bottom surface. Two planar side surfaces may extend between the bottom surface and the top surface. The side surfaces may be perpendicular to the bottom surface. The stepped portion may be parallel to the bottom surface. Ridges may be formed on the surface of the lens to limit an exit angle of light passing through the lens.

A reflector may be positioned between the output face and the lens, or may be positioned between the light source and the input face so that light from the light source reflects from the reflector and enters the input face .

A, beamforming waveguide for a vehicle headlamp may be formed from a solid block of material and has an input face, an output face, and a guide portion extending between the input face and the output face. The guide portion includes a top surface having a first stepped portion that forms a thickness profile to control an output beam pattern of the waveguide. The guide portion further includes a second stepped portion and an inclined portion that forms a transition between the first stepped portion and the second stepped portion.

The guide portion may have a. uniform cross-section along a length of the guide portion from the input face to the output face. The guide portion also may include a planar bottom surface and two planar side surfaces extending between the bottom surface and the top surface. The side surfaces may be perpendicular to the bottom surface. The first and second stepped portions may be parallel to the bottom surface.

A vehicle headlamp may include a beamforming waveguide formed from a bundle of optical conduits. The waveguide has an input face, an output face, and a guide portion extending between the input face and the output face. A light source is positioned at the input face of the beamforming waveguide. A lens is positioned at the output face so that light output by the beamforming waveguide passes through the lens to provide vehicle forward illumination.

Another vehicle headlamp includes a light source configured to produce light.. A lens allows a portion of the light to pass through the lens to produce a headlamp beam. A beamforming wedge moves between a first position and a second position. The wedge is formed from a piece of solid material. An actuator moves the wedge between the first position for producing,a low beam and the second position for producing a high beam.

In the first position, the wedge may be positioned in an area between the lens and the light source, and in the second position, the wedge may be essentially removed from the area between.the lens and the light source. The wedge may have a triangular cross-section in a plane perpendicular to the lens. The wedge may have a low beam portion and a high beam portion.

In the first position, the low beam portion of the wedge may be positioned in an area between the lens and the light source, and in the second position, the high beam area of the wedge may be positioned in the area between the lens and the light source. The high beam portion may vary in thickness across a surface thereof to produce a desired beam pattern. The high beam portion may have facets on a surface thereof to produce a desired beam pattern.

The DLS may incorporate different types of optical waveguide structures to distribute light throughout the vehicle, including joints, elements with epoxy coatings, pinched end collector portions, integrated installation snaps, integrated input optics and integrated output lenses. The DLS.may also include waveguide structures to provide illumination to portions of the vehicle interior, including cup holders, assist grips, storage pockets step-up boards and running boards.

The DLS may employ a compact illuminator that includes a housing having open ends configured to receive waveguides. A reflector is positioned within the housing. The reflector has open end portions, a central portion between the end portions, and a light source positioned within the central portion. Side walls extend between the end portions and at least partially enclose the central portion. The side walls protrude inward toward the light source. The reflector is shorter in length than the housing so that the waveguides fit within the housing and abut the end portions of the reflector.

A length of the end portions may serve to confine light output by the illuminator within the waveguides by internal reflection. An angle formed by the side walls may serve to confine light output by the illuminator within the waveguides by internal reflection. The housing and/or the side walls may have vent holes.

The compact illuminator may include a second reflector having open end portions, a central portion between the end portions and a light source positioned within the central portion. Side walls may extend between the end portions and at least partially enclose the central portion. The side walls may protrude inward toward the light source. An optical waveguide may be positioned between the output of the first illuminator and an input of the second illuminator.

A hybrid compact illuminator includes a housing having reflective interior surfaces-. A lens is positioned on a first side of the housing. A primary light source is positioned within the housing to provide a direct lighting function through the lens. An optical waveguide output port holds an optical waveguide in position to receive light from the primary light source. A secondary light source is positioned within a compartment formed in a second side of the housing.

The compartment may protrude from the housing or extend into the housing. The sides of the hybrid compact illuminator may have vent holes.

A redundant distributed lighting-system may employ two or more illuminators. Each illuminator includes open end portions, a central portion between the end portions and a light source positioned within the central portion. Side walls extend between the end portions and at least partially enclose the central portion. The side walls protrude inward toward the light source. The system also includes an optical waveguide positioned between the output of the first illuminator and an input of the second illuminator.

The DLS also may provide interior lighting functions. For example, an optical waveguide for illuminating the interior of a cup holder in a vehicle may be formed from a piece of solid material. The solid material has a ring portion that is sized and shaped to be received within a cup holder and that releases light into the cup holder. An input face receives light from a light source. An input portion extends between the input face and the ring portion, confines light through internal reflection, and directs light from the input face to the ring portion.

The ring portion may define an inner circumference and may release light around the inner circumference. The ring portion may have a protruding angled portion around the inner circumference that directs light down toward a bottom portion of the cup holder. The upper surface of the angled portion may be stippled. An upper surface of the angled portion may be covered with an opaque material. The ratio of an inner radius of the ring portion to the width of the ring portion may be greater than or equal to 3:1.

The ring portion may include a first arm and a second arm that define a gap in the inner circumference. The second arm may have a smaller cross-section and a smaller length than the first arm. The ring portion may have a web portion that extends between the first and second arms. The web portion may release light along its edge. The ring portion may include a tab that extends from the inner circumference between the first and second arms. The tab may have a rectangular cross-section and may curve toward the bottom of the cup holder. The tab may have a chamfered leading edge.

The optical waveguide described above may be included in an illuminated cup holder having a bottom surface. A side wall may extend from the bottom surface and define a volume shaped and sized to receive a cup. A rim may be positioned around the upper edge of the side wall. An optical waveguide may be used to illuminate the inside of an assist grip in a vehicle. The waveguide is a piece of solid material having an illumination portion with an inner surface and an outer surface. The illumination portion is sized and shaped to be received within a channel along the length of the assist grip and releases light from the inner surface. An input face at one end of the illumination portion receives light from a light source.

The inner surface may be stippled. The ratio of the inner radius of a bend to the width of the waveguide may be greater than or equal to 3:1. The waveguide may have snaps extending from the outer surface that hold the illumination portion in place within the channel. A lens positioned adjacent to the light source may focus light from the light source to form a courtesy light. An illuminated assist grip for a vehicle including the waveguide described above also may have a handle portion formed of solid material, a channel formed along the length of the handle and a light source receptacle configured to receive a light source.

An optical waveguide for a vehicle door illuminates an area beneath the vehicle. The door has a bottom surface that meets a floor surface of the vehicle when the door is closed. The waveguide includes a door portion positioned inside the door and extending to the bottom surface of the door. A floor portion extends from the floor surface to the underside surface of the vehicle. The door portion and the floor portion meet when the door is closed so that light may pass through the door portion and the floor portion to illuminate the area beneath the vehicle. The waveguide may include a branch that extends from the door portion to an interior surface of the door to illuminate the interior of the vehicle.

An illuminated storage pocket for a vehicle may have a surface that defines a storage volume and a rim around an edge of the surface. A waveguide formed from a piece of solid material has an illumination portion that has an inner surface and an outer surface. The illumination portion is received within a channel along the rim of the storage pocket and releases light from the inner surface. An input face at one end of the illumination portion receives light from a light source.

The inner surface of the waveguide may be stippled. The waveguide may include snaps that extend from the outer surface and hold the illumination portion in place within the channel.

An optical waveguide may include first and second pieces of solid material. The first piece has a transmission portion with a rectangular cross-section. The end of the transmission portion is convex in one dimension. The second piece has a transmission portion with a rectangular cross-section. The end of the transmission portion is concave in one dimension. The end of the first piece and the end of the second piece form an interface between the first and second pieces.

The waveguide may include a third piece of solid material having a transmission portion with a rectangular cross-section. The end of the transmission portion may be concave or convex in one dimension. The end of the third piece and.the end of the first piece may form an interface between the first and.third pieces. A band may hold the first, second and third pieces together.

An optical waveguide may accept light from a light source and transmit the light. The waveguide is formed from a piece of solid material having an input face, a transmission portion and an end portion between the input face and the transmission portion. A cross-sectional area of the end portion gradually decreases from the transmission portion to the input portion.

The end portion may have planar sides angled from a longitudinal axis of the transmission portion. The angle formed between the sides and the longitudinal axis may be about 5°. The end portion may increase the acceptance angle of the waveguide. A lens portion may be formed on the input face.

An optical waveguide may have integrated installation elements. The waveguide includes first and second sections.. The first section has an input face, an output end and a transmission portion extending from the input face to the output end. A key is positioned on the output end and mates with a socket of the second section. The second section has an input face, an output end and a transmission portion extending from the input face to the output end. A socket is positioned on the output end and mates with the key of the first section.

The waveguide may include a snap positioned on the transmission portion of the first or second section. The snap may mate with an installation fitting of a vehicle. The outer surface of the waveguide may be covered with epoxy. The integrated installation elements also may include a claw positioned on the output end of the first section and configured to mate with a detent of the second section.

An optical waveguide may have an output element for providing illumination in a vehicle. The waveguide includes an input face and a transmission portion extending from the input face. The transmission portion widens at an end to form an output element having a convex lens at the end of the output element. The output element may be formed to leave an air gap between the lens and the end-of the transmission portion.

The DLS may include illuminated step-ups and running boards provide aesthetically pleasing lighting effects for a vehicle. The optical waveguide configurations employed in these lighting assemblies provide several advantages. For example, the step-ups and running boards are illuminated along their lengths without the use of long, tubular light sources, such as neon or fluorescent tubes, that may be susceptible to failure and breakage. This feature is particularly important because the step-ups and running boards are located where they may suffer impacts as people enter or exit a vehicle. In addition, the waveguides may be formed from injection-molded plastic or acrylic, resulting in increased durability and reduced manufacturing and installation cost compared to fiber optics or other types of light transmission conduits.

An illuminated step-up for a vehicle includes a step-up plate mounted on the door sill of a vehicle. A slot extends along a portion of a length of the step-up plate. An optical waveguide formed from a solid piece of material is positioned to release light through the slot.

An illumination portion of the waveguide may have top and bottom surfaces and may be configured to release light from the top surface. A first input face at one end of the illumination portion may be configured to receive light from a first light source. A second input face at an opposite end of the illumination portion may be configured to receive light from a second light source. The bottom and/or the top surface may be stippled. The bottom and/or top surface may be at least partially covered with diffusing material.

The waveguide may be divided into first and second portions. A reflector may be positioned between the first and second portions of the waveguide and configured to receive a light source and direct light into the first and second portions. Colored filters may be positioned between the reflector and the first and second portions.

Snaps may extend from the top surface and may be configured to mount the illumination portion on the step-up plate. A light source receptacle may be positioned to hold a light source at the first input face .

An illuminated running board for a vehicle includes a running board plate positioned on the top surface of a running board that forms a ledge extending from the vehicle along the length of a vehicle door opening. A slot extends along a portion of a length of the running board plate. An optical waveguide formed from a piece of solid material is positioned to release light through the slot.

A DLS may be installed in a vehicle panel, such as a door panel, trunk panel, or head liner. A panel DLS provides several advantages. For example, it eliminates the need for electrical wiring, multiple light bulbs, connectors, and PC boards, within the panel. The single, high reliability light source in the DLS can meet all of the lighting requirements for particular lighting functions. The source may be accessible through an access port in the panel, so that it can be easily replaced without removing the panel. In addition, the light source may be located in another position within the vehicle, such as under the dashboard. Light may be carried from the light source to the panel waveguide assembly through a waveguide, waveguide joint, or optical fiber that passes from the vehicle body into the panels. Such a configuration reduces the electrical wiring required between the vehicle body and the panels, which reduces complexity and manufacturing costs. In addition, the panel waveguide may be formed as a single piece of injection molded plastic, which further reduces manufacturing costs.

An optical waveguide assembly for distributing light within a vehicle door panel or head liner includes a light source that outputs light to an optical waveguide. A trunk waveguide that propagates light through internal reflection has output branches and a trunk input portion connected to the light source. Branch waveguides that propagate light through internal reflection extend from the output branches of the trunk waveguide to lighting outputs of the vehicle door panel. Support arms extend between the branch waveguides and support the branch waveguides within the vehicle door panel.

The waveguides and support arms may be formed from a single piece of solid material. The solid material may be injection molded plastic.

The optical waveguide assembly may include a compact illuminator as the light source. The compact illuminator may include a housing having reflective interior surfaces, a bulb positioned within the housing, and an optical waveguide output port that holds an optical waveguide in position to receive light from the bulb.

The compact illuminator may include a housing having open ends configured to receive waveguides and a reflector positioned within the housing. The reflector may include open end portions, a central portion between the end portions, a light source positioned within the central portion, and side walls' extending between the end portions and at least partially enclosing the central portion: The side walls may protrude inward toward the light source.

The optical waveguide assembly may have lighting output elements positioned at the ends of the branch waveguides. The lighting output element may be an optical waveguide output element. The waveguide output element may have an input face and a transmission portion extending from the input face. The transmission portion may widen at an end to form a conical end portion having a convex lens at an end of the conical end portion.

The lighting output element may be a waveguide bend. The waveguide bend may have a bend ratio that is less than 3:1 or less than 1:1.

Another optical waveguide assembly for distributing light within a vehicle panel includes a light source. A cylindrical sleeve accommodates and receives light from the light source. The sleeve has a central axis. A waveguide collar is formed from a solid, planar block of material having a central portion to accommodate and surround the sleeve. The waveguide collar has output branches extending in a plane away from the central portion. The plane is substantially perpendicular to the central axis. The optical waveguide assembly further includes branch waveguides that propagate light through internal reflection. The branch waveguides extend from the output branches of the waveguide collar to lighting- outputs of the vehicle door panel. Support arms extend between the branch waveguides and support the branch waveguides within the vehicle door panel.

Another optical waveguide assembly for distributing light within a vehicle door panel includes a hub portion connected to receive light from a light source. The hub portion has outputs. Waveguides that propagate light through internal reflection extend from the outputs of the hub to lighting outputs of the vehicle door panel. Support arms extend between the waveguides and support the waveguides within the vehicle door panel.

An illuminated door handle for a vehicle includes a handle having an inside surface in which a channel is defined. A handle waveguide is positioned in the channel. The handle waveguide releases light along its length.

A surface of the handle waveguide may be stippled, may have a reflective coating, or may be covered with a reflective material.

The illuminated door handle may include a light source at an end of the handle waveguide. A collector element may be positioned between the light source and the end of the handle waveguide.

The illuminated door handle may have a button positioned in a button well at an end of the handle. The illuminated door handle also may have a light source at an end of the handle waveguide and a collector element positioned between the light source and the end of the handle waveguide. A button well transmission portion may extend from an opposite end of the handle waveguide and may be positioned to output light for illumination of the button well.

The button well transmission portion may include a ring waveguide that is positioned in the button well and at least partially surrounds the button. A surface of the ring waveguide. may be stippled, may have a reflective coating, or may be covered with a reflective material.

The button well transmission portion may include a waveguide end portion. The button may include a waveguide port that is positioned to receive light from the waveguide end portion.

The button also may include a slot extending around a periphery of the button. An internal waveguide may receive light from the waveguide port and emit light into the button well through the slot.

The illuminated door handle may include a light source at an end of the handle waveguide, a first collector element' positioned between the light source and the end of the handle waveguide, and a second collector element on a side of the light source opposite the handle waveguide. A button well transmission portion may extend from the second collector and may be positioned to output light for illumination of the button well.

The button well transmission portion may include a ring waveguide that is positioned in the button well and at least partially surrounds the button.

The button well transmission portion may include a waveguide end portion. The button may include a waveguide port that is positioned to receive light from the waveguide end portion.

The illuminated door handle may include a light source positioned in the button, and a slot extending around a periphery of the button. The slot may output light from the light source. A waveguide port may be formed in a side of the button to output light from the light source. A button well transmission portion may extend from an end of the handle waveguide and may be positioned to receive light from the light source. The button well transmission portion may include a waveguide ring at least partially surrounding the button or a waveguide end portion that receives light from the waveguide port

An optical waveguide structure for distributing light from a light source includes a cylindrical sleeve configured to accommodate and receive light from a light source. The sleeve includes a central axis. A waveguide collar is formed from a solid, planar block of material. The block of material has a central portion configured to accommodate and surround the sleeve. The first and second output arms extend in a plane away from the central portion. The plane is substantially perpendicular to the central axis.

The sleeve may be configured to confine a portion of light from the light source through internal reflection and to transmit the light away from the light source in the direction of the central axis. The sleeve may be longer in the direction of the central axis than a thickness of the central portion in that direction. The sleeve may have rim portions that are positioned to define gaps, the gaps being configured to accommodate locking tabs of a lamp base.

An integral lens portion may be formed at an end of the first arm. The first and second arms may be optical waveguides that are positioned on a surface of the waveguide collar. The waveguides may extend across the surface of the waveguide collar and beyond an edge of the waveguide collar. The first and second arms may be optical waveguides that protrude above a top surface and below a bottom surface of the waveguide collar.

A waveguide collar for distributing light from a light source includes a solid, planar block of material. The block of material has a central portion that accommodates a light source. The central portion surrounds the light source in a plane. First and second output arms extend in the plane away from the central portion. The thickness of the central portion in a direction perpendicular to the plane is less than a thickness of the output arms in the direction perpendicular to.the plane.

A cylindrical sleeve may accommodate and receive light from a light source. The sleeve may be positioned within the central portion.

A waveguide collar for distributing light from a light source includes a solid, planar block of material. The block of material has a hub defining an interior portion configured to accommodate a.light source. The hub has side surfaces on an exterior portion. Alignment notches are positioned on the side surfaces. The notches are configured to receive an alignment tab of a waveguide. Rim portions extend around the interior portion of the hub. The rim portions are positioned to define gaps that accommodate locking tabs of a lamp base.

A waveguide collar for distributing light from a light source includes a solid, planar block of material. The block of material has a central portion that accommodates a light source. The central portion surrounds the light source in a plane. First and second output arms extend in a plane away from the central portion. The sides.of the first and second output arms curve inward toward the central portion to form first and second vertices where the first and second arms meet. A lens is formed on an edge of the waveguide collar. The lens receives light from the light source, focuses a portion of the light, and transmits the portion of the light away from the collar.

An optical waveguide includes first and second pieces of solid material. The first piece has a transmission portion having a rectangular cross-section and an end that is convex in one dimension. The second piece has a transmission portion having a rectangular cross-section and an end that is concave in one dimension. The end of the first piece and the end of the second piece form an interface between the first piece and the second piece.

A third piece of solid material may have a transmission portion having a rectangular cross-section and an end that is concave in one dimiension. The end of the third piece and the end of the first piece may form an interface between the third piece and the first piece. A band may hold the first, second and third pieces together.

A third piece of solid material may have a transmission portion having a rectangular cross-section and an end that is convex in one dimension. The end of the third piece and the end of the second piece may form an interface between the third piece and the second piece. A band may hold the first, second and third pieces together.

An optical waveguide for accepting light from a light source and transmitting the light includes a piece of solid material having an input face, a transmission portion, and an end portion between the input face and the transmission portion. A cross-sectional area of the end portion gradually decreases from the transmission portion to the input face.

The end portion may have planar sides angled from a longitudinal axis of the transmission portion. The angle formed between the sides and the longitudinal axis may be about 5°. The end portion may increase an acceptance angle of the waveguide. A lens portion may be formed on the input face.

An optical waveguide has integrated installation elements. The waveguide includes first and second sections. The first section includes an input face, an output end and a transmission portion extending from the input face to the output end. A key positioned on the output end mates with a socket of the second section. The second section includes an input face, an output end and a transmission portion extending from the input face to the output end. A socket positioned on the output end mates with a key of the first section.

A snap positioned on the transmission portion of the first or second section may mate with an installation fitting of a vehicle. An outer surface of the waveguide may be covered with epoxy.

An optical waveguide includes first and second sections. The first section includes an input face, an output end and a transmission portion extending from the input face to the output end. A claw positioned on the output end mates with a detent of the second section. The second section includes an input face, an output end and a transmission portion extending from the input face to the output end. A detent positioned near the output end mates with the claw of the first section.

An optical waveguide has an output element for providing illumination in a vehicle. The waveguide includes an input face and a transmission portion extending from the input face. The transmission portion widens at an end to form an output element having a convex lens at the end. The output element may be formed to leave an air gap between the lens and the end of the transmission portion.

An optical waveguide structure is configured to receive light from a light source and to distribute the light to output ports. The structure includes a central portion having top and bottom surfaces, peripheral edges, and an opening for receiving the light source. A first waveguide extends above the top surface of the .central portion. The first waveguide has an input face at an end nearest the opening. The first waveguide extends from the opening toward a peripheral edge of the central portion.

A lighting component for distributing light from a light source includes a support structure made of a solid material and having top and bottom surfaces. An integral optical waveguide made of the solid material is on the top surface. The support structure is wider than the optical waveguide.

These waveguide structures collect light from a light source and distribute the light to various output points. The structures may be easily and inexpensively manufactured and installed. The structures allow a single light source to provide multiple lighting functions within, for example, the interior of a vehicle.

Other features and advantages will be apparent from the following detailed description, including the drawings, and from the claims.

Brief Description of the Drawings

Fig. 1 is a block diagram of a vehicle distributed lighting system with hybrid lighting subsystems.

Fig. 2 is a side view of a hybrid headlamp subsystem.

Fig. 3 is a side-view of a hybrid headlamp subsystem with a movable lens.

Figs. 4 and 5 are end views of a headlamp beamforming waveguide.

Fig. 6 is a perspective view showing operation of the waveguide of Fig. 4.

Fig. 7 is a block diagram of a headlamp using a bundle of fibers.

Figs. 8 is'a top view showing operation of a beamforming wedge and a reflector.

Figs. 9 and 10 are side views showing operation of low beam/high beam systems.

Fig. 11 shows a light source with a diffusion grating.

Figs. 12-17 show waveguide outputs modulated with electromechanical or liquid crystal light valves.

Fig. 18 shows a hybrid tail light subsystem.

Figs. 19 and 20 show a waveguide output bend for a tail light.

Figs. 21-25 show compact illumination cartridges.

Fig. 26 is a top view of an optical waveguide.

Figs. 27 and 28 are side and bottom views of a waveguide joint.

Fig. 29 is a. cross-section view of an epoxy-coated optical waveguide.

Figs. 30-32 are side views of non-tapered and tapered waveguide inputs.

Figs. 33 and 34 are side views of waveguide sections having integrated installation components and an integrated output structure.

Fig. 35 is a side view of a leaky waveguide bend and focusing lens.

Figs. 36 is a perspective view of an optical manifold.

Fig. 37 is a side view of an optical manifold.

Fig. 38 is a perspective view of a waveguide collar with four arms.

Fig. 39 is a top view of the waveguide collar of Fig. 38.

Fig. 40 is a side view of a light source with a cylindrical sleeve.

Figs. 41 and 42 are perspective views of light sources with cylindrical sleeves.

Fig. 43 is a side view of stacked waveguide collars.

Fig. 44 is a top view of a waveguide collar.

Fig. 45 is a side view of a waveguide collar.

Fig. 46 is a top view of a waveguide collar.

Fig. 47 is a side view of a waveguide collar.

Fig. 48 is a top view of a waveguide collar with two arms.

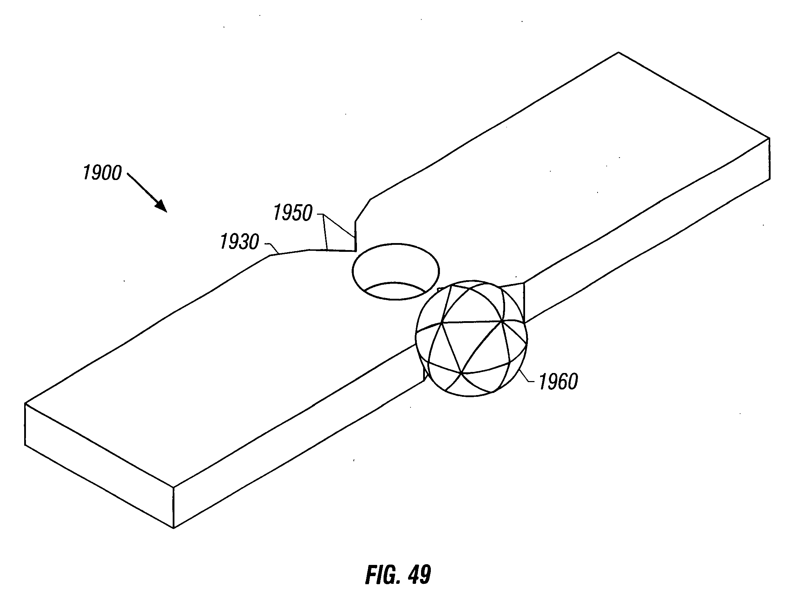

Figs. 49 and 50 are perspective views of waveguide collars with two arms and integrated output lenses.

Fig. 51 is a light ray diagram for a waveguide collar with two arms and two output lenses.

Fig. 52 is a perspective view of a waveguide structure having embedded waveguides.

Fig. 53 is a top view of a waveguide structure having embedded waveguides and a cylindrical sleeve.

Fig. 54 is a perspective view of a waveguide structure having raised waveguides with angled input faces.

Fig. 55 is a light ray diagram for the waveguide structure of Fig. 54.

Fig. 56 is a side light ray diagram for the waveguide structure of Fig. 54.

Fig. 57 is a side view of raised waveguides mounted on a top surface of a waveguide structure.

Fig. 58 is a side view of embedded waveguides extending from the top and bottom surfaces of a waveguide structure.

Fig. 59 is an end view showing a channel beneath a waveguide mounted on the top surface of a waveguide structure.

Fig. 60 is an end view showing a channel with inclined sides beneath a waveguide mounted on the top surface of a waveguide structure.

Fig. 61 is a top view of a lighting system having raised waveguides.

Figs. 62-66 are views of a modular distributed lighting system.

Figs. 67 and 68 are block diagrams of a combination security/puddle light.

Fig. 69 is a perspective view of a waveguide installed in a vehicle step up and running board.

Figs. 70-76 are perspective and side views of illumination components for vehicle step ups and running boards.

Fig. 77-82 show cup holder illumination components.

Fig. 83 is a rear view of a waveguide installed in a handgrip.

Fig. 84 is a side cross-section view of a waveguide and light source installed in a handgrip.

Fig. 85 is a side view of a waveguide with integrated snaps for installation into a handgrip.

Fig. 86 is a side view of a vehicle door panel with a distributed lighting system.

Fig. 87 is a perspective view of a vehicle door panel waveguide assembly.

Fig. 88 is a side view of a vehicle door panel waveguide assembly.

Figs. 89-91 are perspective views of the junction between branch waveguides and support arms in a vehicle door panel waveguide assembly..

Fig. 92 is a perspective view of a vehicle door handle illumination component with a waveguide ring.

Fig. 93 is a partial cut-away side view of an illumination component installed in a vehicle door handle.

Fig. 94 is a button for a vehicle door handle having an internal waveguide.

Fig. 95 is a vehicle door handle illumination component with a waveguide end portion.

Fig. 96 is an alternative configuration of a vehicle door handle illumination component with a waveguide end portion.

Fig. 97 is an alternative configuration of a vehicle door handle illumination component with a waveguide ring.

Fig. 98 is a button for a vehicle door handle having an internal light source.

## Description

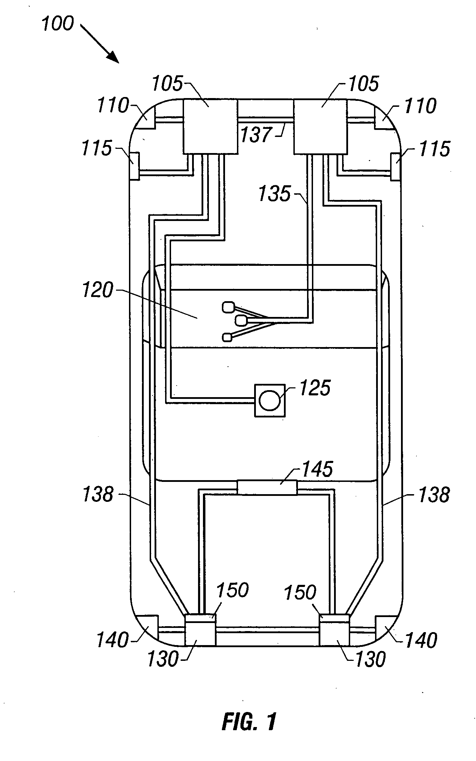

Referring to Fig. 1, a vehicle distributed lighting system (DLS) 100 includes hybrid headlamp subsystems 105, turn signal subsystems 110 and 140, and hybrid tail light subsystems 130. The hybrid headlamp subsystems 105 provide primary forward illumination for the vehicle. The headlamp subsystems 105 are also light sources for other exterior lights, such as front turn signals of the subsystems 110 and side markers 115, as well as interior lights, such as dashboard lights 120 and dome lights 125. These other lights are connected to.the headlamp subsystems by optical waveguides 135 or optical fibers. Similarly, the tail light subsystems 130 provide light for rear turn signals 140 and a center high mounted stop light (CHMSL) 145.

The subsystems of the DLS are interconnected so that the light source of one subsystem serves as a redundant light source for another subsystem. In particular, waveguides or optical fibers also may carry light from the headlamps subsystem to-other subsystems that have their own light sources, such as the opposite headlamp subsystem (waveguide 137) or the corresponding tail light subsystem (waveguide 138), to provide light source redundancy. When redundancy is employed and, for example, one of the headlamps fails, light from the operational headlamp will dimly illuminate the failed headlamp. This is safer for the operator of the vehicle than having only one operational headlamp. Redundancy also may be used to reduce the effects of failure of other lighting components. For example an incandescent printed circuit (PC) bulb (i.e., a small bulb designed to be mounted on a printed circuit board) may be used as a source for trunk lighting and may be connected to provide redundancy to interior reading lights.

## Headlamp Subsystem

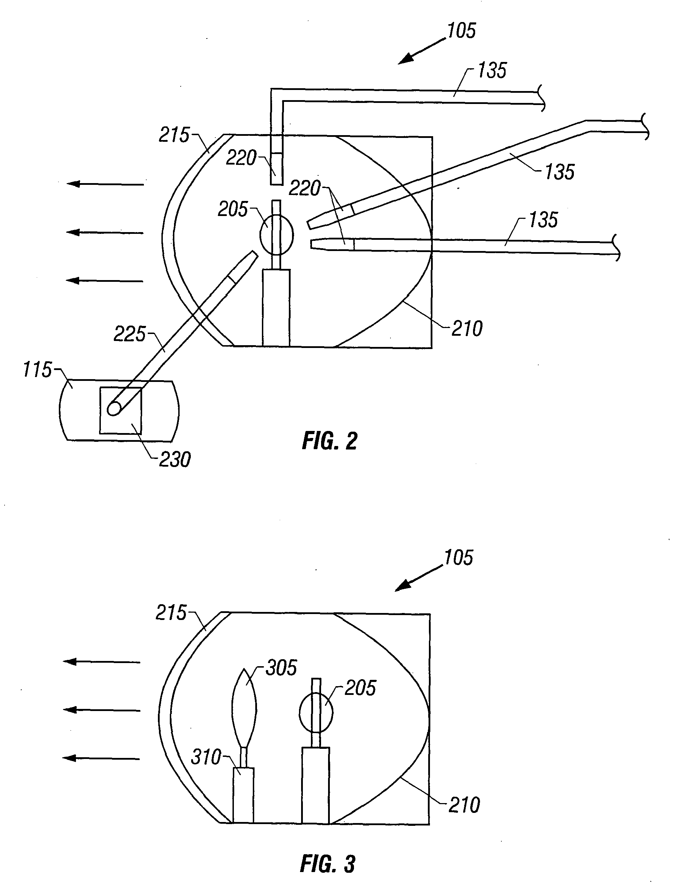

Fig. 2 illustrates a hybrid headlamp subsystem 105. The subsystem includes a light source 205 that may be implemented using, for example, a high-intensity discharge (HID) lamp. Light produced by the light source 205 is collected by a reflector 210 and directed through a lens 215 to provide the primary forward illumination for the vehicle. The reflector may be implemented as a parabolic or complex reflector.

In addition to providing the primary forward illumination the light source 205 acts as a light source for other parts of the system. As shown in Fig. 2, waveguides 135 having collector elements 220 at their ends are positioned close to the light source 205 to receive light and transmit the light to other locations in the vehicle, such as to provide turn signals, interior lighting, fog lights, and side markers. The waveguides 135 may also carry light to other lighting subsystems to provide redundancy, such as the opposite side headlamp or the tail lights. The number of collector elements 220 may be increased as necessary to supply light for other lighting functions. The collector elements 220 maybe glass rods (such as Pyrex™) with ends that are polished so as to be faceted or pinched. The pinched ends increase the acceptance angle of the collector element.

A waveguide 225 carries light from the source to a side marker light 115. The waveguide 225 may include colored plastic filters 230 to provide a desired output color (e.g., amber) for the side marker 115. This configuration eliminates the need for an electrical connection and light bulb in the side marker 115.

Another waveguide provides light to the turn signal subsystem 110. Alternatively, the turn signal subsystem 110 may include an independent light source and may use the input from the headlamp subsystem 105 for redundancy.

The hybrid headlamp subsystem 105 provides both high beam and low beam illumination. To this end, the subsystem may employ a number of different beam forming techniques, as shown in Figs. 3-11. For example, Fig. 3 shows a simple Fresnel lens 305 that is moved by an actuator 310 between a high beam position and a low beam position. The movement of the lens 305 shifts the position of the "hot spot" (i.e., the area of most concentrated light) of the headlamp beam in the far field between the appropriate positions for the high and low beams. Other portions of the beam also will shift as the lens 305 moves. In addition.to the lens shown, additional lenses or other optical elements (such as wedges) may be used to control the beam pattern.

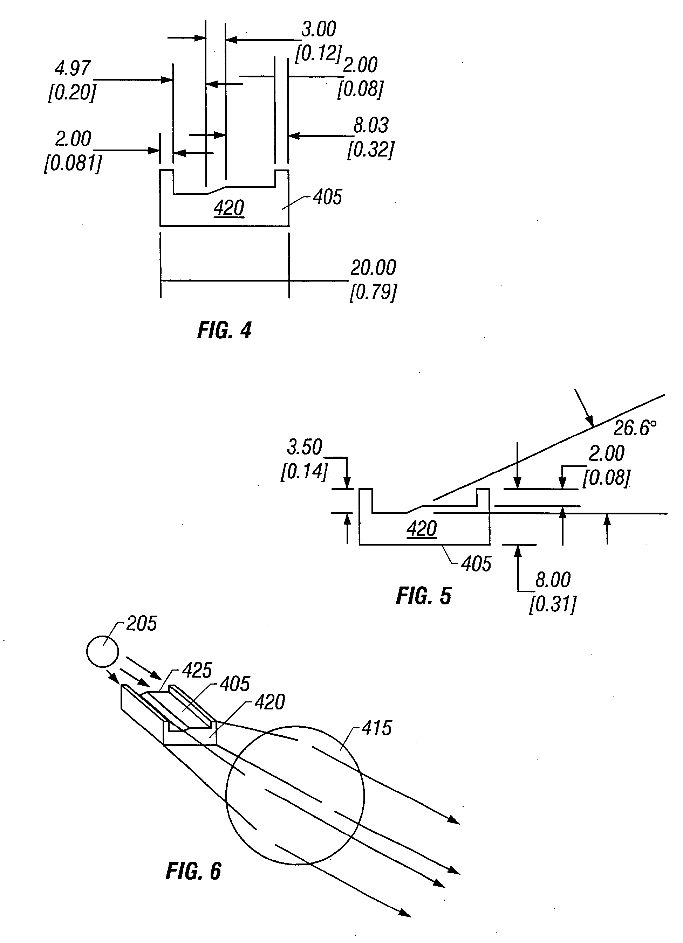

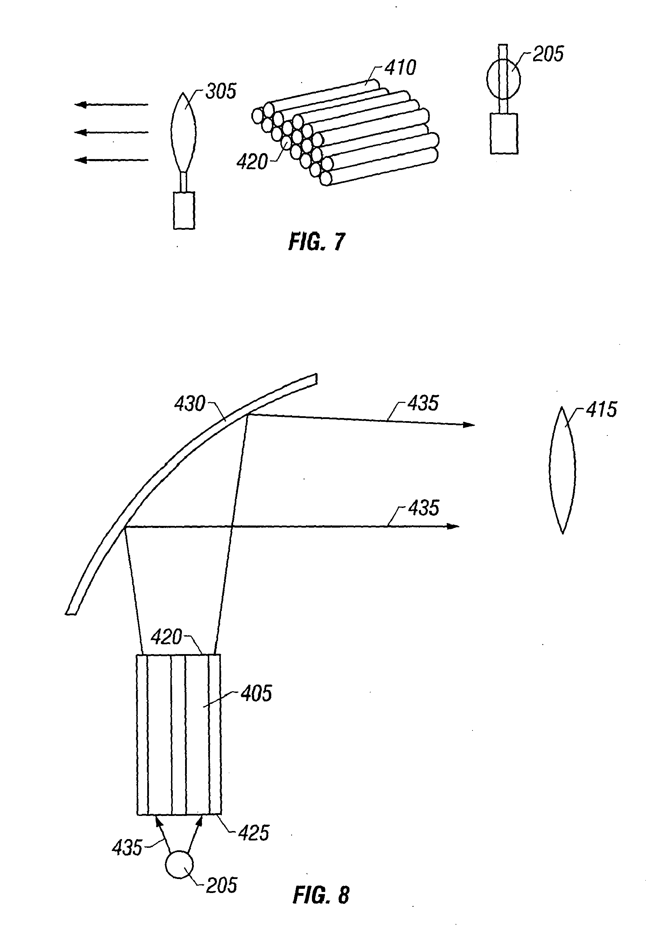

Figs. 4-11 show the use of beamforming structures, such as a solid molded form 405 (Figs. 4-6), a bundle of plastic or glass fibers .410 (Fig. 7), or a solid molded wedge (Figs. 8-10), to generate a desired headlamp beam pattern. As shown in Figs. 4-7, light from a light source 205 passes through a form 405 or bundle 410 and then passes through a focusing lens 415. The shape of the output end 420 of the solid form 405 or bundle 410, in conjunction with the properties of the focusing lens 415, determines the beam pattern in the far field.

To increase light collection efficiency, the shape of the input end 425 of the solid form may be configured to act as a collector element to receive light from a light source. A reflector 210, similar to that shown in Fig. 2, may focus light from the light source and direct the light toward the input of the beamforming structure.

Alternatively, as shown in Fig. 8, the.beamforming structure may be positioned between the light source and a reflector 430. In such a configuration, light 435 from the light source 205 enters the input face 425 of the solid form 405 (a fiber bundle 410 may also be used), passes through the form 405, and is transmitted from the output face 420. The light 435 then is reflected from the reflector 430.and output by the headlamp. A lens 415 may be positioned at the output, as shown in Fig. 8, or between the form 405 and the reflector 430.

Figs. 4-6 show dimensions in millimeters and inches (designated by "inches") of a thickness profile of a beamforming structure that may be used to achieve a desired beam pattern. Similarly, the bundle of fibers can be.formed into a desired profile. The input or output ends of the fibers may be fused together. As with the implementation shown in Fig. 3, the lens 305 may be moved to shift the hot spot of the beam between high beam and low beam positions. The solid molded form 405 may be inexpensively manufactured using injection molding techniques. The form 405 may be replaced to implement alternative beam patterns or to meet differing specifications or regulations.

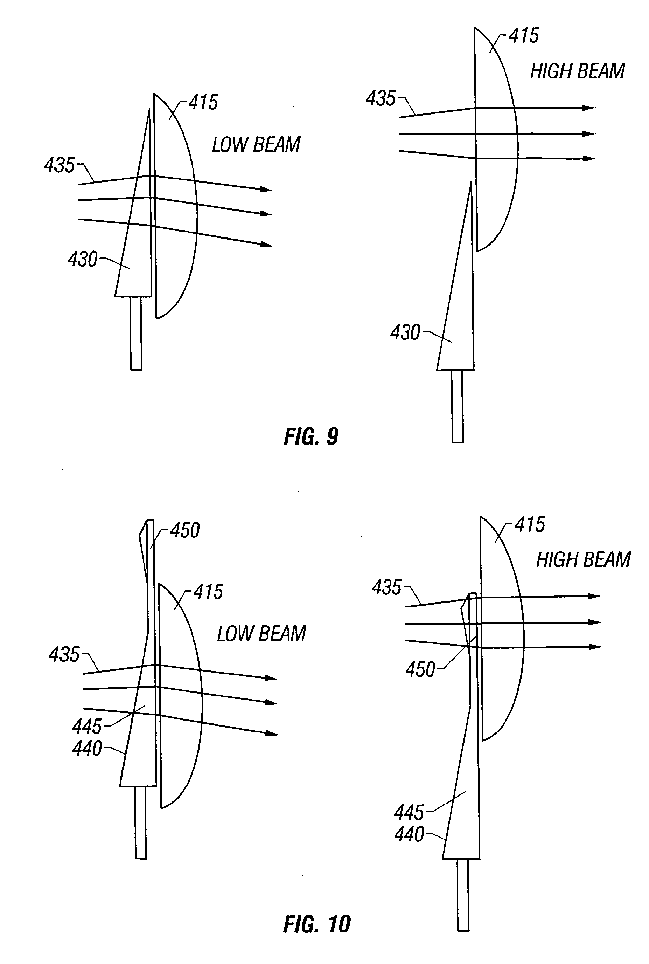

Fig. 9 shows a simple solid wedge 430 positioned on the side of a lens 415 facing the light source. Light 435 from the light source passes through the wedge 430 and is directed downward to provide a headlamp low beam. The wedge 430 is moved away from the lens 415 to allow the light 435 to pass directly through the lens 415 to provide a headlamp high beam. As Fig. 9 shows, in the high beam position, the lens is essentially removed from the area between the light source and lens. However, a small portion may remain in front of the lens. In this configuration, most of the light from the light source passes directly through the lens and bypasses the wedge 430.

Similarly, Fig. 10 shows a complex wedge 440 having a low beam portion 445 and a high beam portion 450. The wedge 440 is -positioned on the side of the lens facing the light source. Light 435 from the light source passes through the low beam portion 445 of the.. wedge 440 and is directed downward to form a headlamp low beam. In this position, the high beam portion 450 may cover a portion of the.lens. However, most of the light 435 from the light source passes through the low beam portion 445 and the lens 415 and bypasses the high beam portion 450.

The wedge 440 is moved downward so that the high beam portion 450 of the wedge 440 is positioned between the light source and the lens. The high beam portion 450 may vary in thickness or have facets across its surface in order to produce a desired beam pattern. In addition, the position of the wedge 440 may be continually adjusted during driving to maintain the direction of the forward illumination relative to the road surface. The wedge also may have additional portions that produce other lighting patterns, such as peripheral or fog lighting.

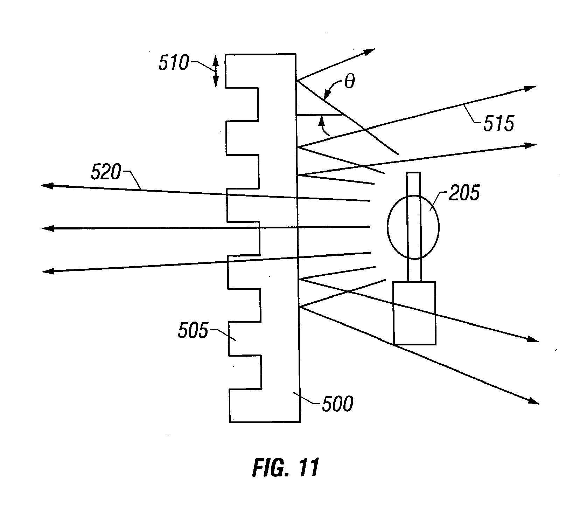

Fig. 11 shows the use of a diffraction grating 500 to control the headlamp beam pattern. The diffraction grating also may be used for other lighting functions, such as stop lights and turn signals. The diffraction grating 500 includes essentially transparent material that has a series of ridges 505 on its surface. The width 510 of the ridges is approximately equal to the wavelength of the light produced by the light source 205. A portion 515 of the light passing through the diffraction.grating 500 is reflected back toward the light source, with the size of the portion depending upon the exit angle ($\theta$) of the light ray. Some of the light 520 travelling in a direction close to perpendicular ($\theta=0°$) passes through the grating undisturbed. By limiting the exit angle (θ) of the headlamp illumination, the grating 500 may provide, for example, a more focused headlamp beam in the far field. The grating 500 may be used alone or in conjunction with lenses 305, solid forms 405, or fiber bundles 410, as described above, to provide a desired headlamp beam pattern.

Turn Signal Subsystem

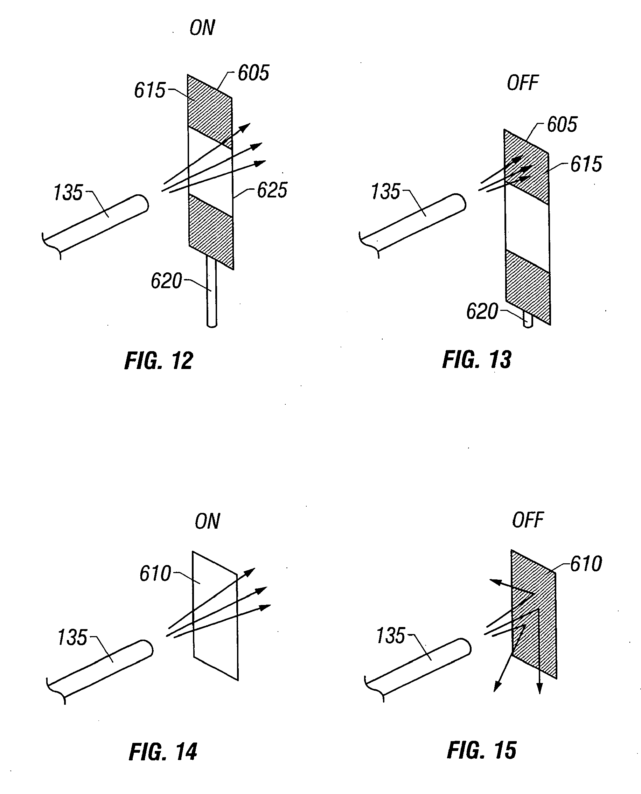

As shown in Figs. 12-17, some implementations of the turn signal subsystem 110 of Fig. 1 use an electromechanical shutter 605 (Figs. 12 and 13), while others use a liquid crystal light valve (LCLV) 610 (Figs. 14 and 15), to modulate the light produced by the turn signal. A plastic colored filter provides amber color for the turn signal. The use of a colored filter eliminates the need for light bulbs enclosed in cadmium-doped glass, and thereby provides significant benefits.

The electromechanical modulator 605, as shown in Figs. 12 and 13, includes an opaque shutter 615 that is moved between an ON (Fig. 12) and OFF (Fig. 13) position by a solenoid 620. In the ON position, the shutter 615 is moved away from the illumination path, so that essentially all of the light is transmitted. In the OFF position, the shutter 615 blocks the illumination path so that no light is transmitted. The use of an electromechanical modulator 605 with an amber-colored plastic filter provides a desirable aesthetic effect (i.e., the turn signal appears amber when ON but has no color when OFF).

The LCLV illustrated in Figs. 14 and 15 has no mechanical components. This increases the reliability of the LCLV relating to systems that include mechanical components. The LCLV 610 has two states. In the OFF state (Fig: 15) the LCLV 610 reflects or scatters most of the incident light. Alternatively, the. LCLV 610 may absorb most of the incident light. In the ON state (Fig. 14) the LCLV 610 becomes largely transparent (i.e., greater than 80% of incident light passes through the LCLV). The ratio of the light transmitted in the ON state relative to the light transmitted in the OFF state (i.e., the contrast ratio) is approximately 5:1, which meets SAE requirements for a turn signal. A contrast ratio of 5:1 also meets the SAE requirements for stop lights used as turn signals. An infrared reflecting mirror (not shown) may be used to shield the LCLV from infrared energy from the source, thereby" increasing the expected life of the LCLV.

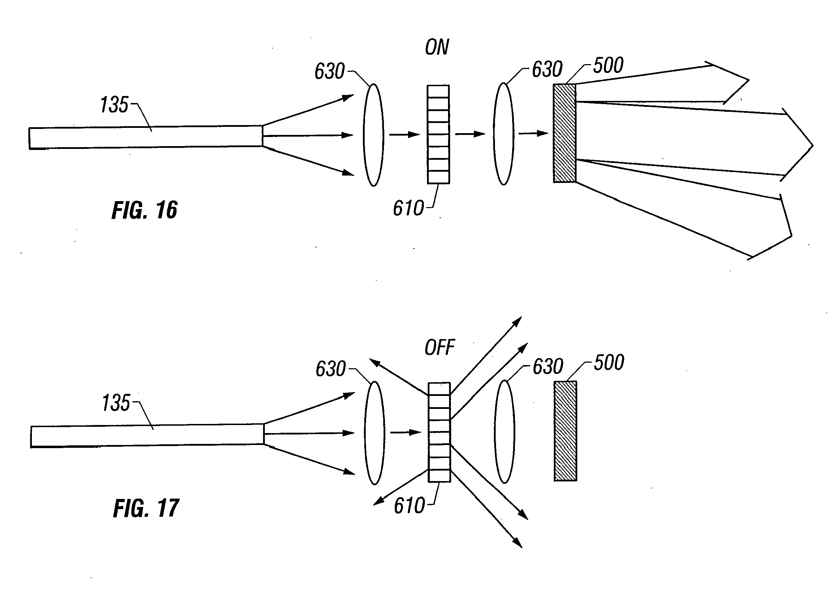

As shown in Figs. 16 and 17, LCLV modulators 610 may be combined with diffraction gratings 500 to improve the contrast ratio and achieve a desired beam pattern. As discussed above, light from the light source (waveguide 135) is scattered when the LCLV is OFF (Fig. 17). The diffraction grating 500 lessens the amount of forward scattered light that is emitted. Focusing optics, such as lenses 630, may also be used to provide further beam pattern control.

Tail Light Subsystem

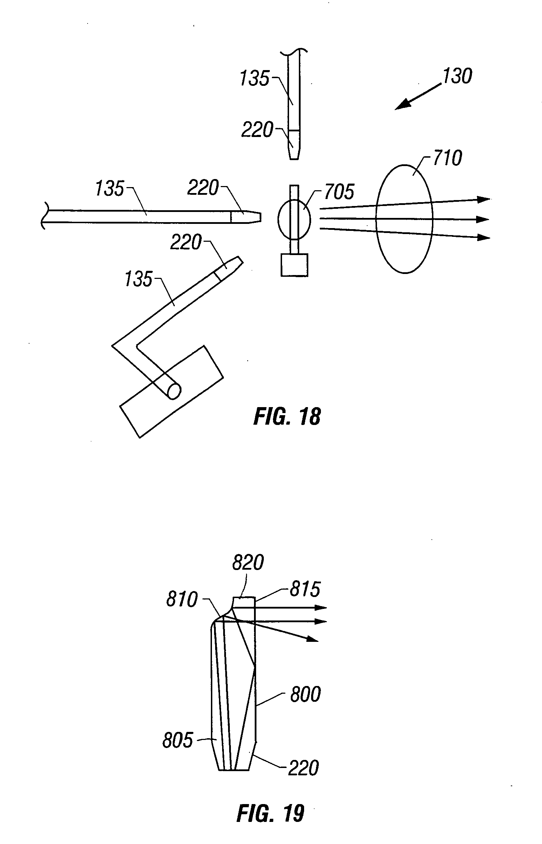

The tail light subsystems 130 of Fig. 1 operate similarly to the headlamp subsystems. As shown in Fig. 18, a tail light subsystem 130 has a light source 705 that provides primary rear illumination through a lens 710. The light source 705 may be a HID lamp or another type of lighting source, such as an incandescent lamp, since the lighting requirement (in lumens) generally is less than the requirement for a headlamp. In general, an incandescent source is significantly less expensive than an HID source.

Waveguide collector elements 220 in the tail light subsystem are positioned close to the source 705 to receive light and transmit the light to other lighting elements, such as the rear turn signals 140, backup lights 150, and center high-mounted stop light (CHMSL) 145. A combination stop/rear turn signal light may be modulated with a LCLV 610, as discussed above with respect to the forward turn signals. The backup lights 150 and CHMSL 145, however, are modulated with electromechanical shutters 615, since they must be completely dark in the OFF mode.

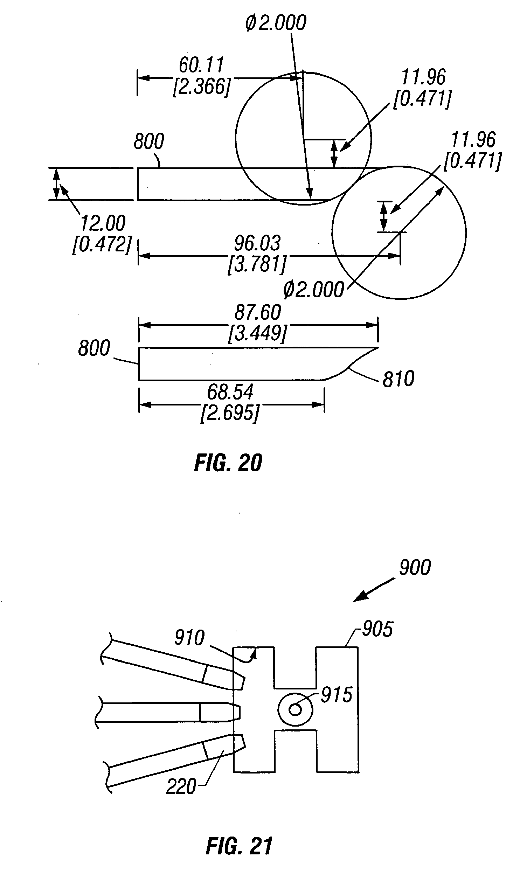

The rear turn signals subsystems 140 also may be implemented in the manner shown in Figs. 19 and 20. In particular, a waveguide section 800 may be used to provide a desired beam pattern for the rear turn signal. Light from a collector element 220 or an independent light source is received at the input 805 of the waveguide section 800 and is internally reflected by the surfaces of the waveguide as it propagates. The waveguide 800 includes a bend 810 immediately prior to the output 815. The outer surface of the bend 810 is s-shaped, which changes the distribution of light across the output surface 815 and hence the far field beam pattern of the turn signal. The outer surface of the bend 810 may be coated with silver or aluminum to increase reflectivity. The top surface 820 also may serve as an output port. As an example, Fig. 20 shows dimensions in millimeters and inches '(designated by "inches") of a waveguide 800 for use in providing a desired beam pattern.

Compact Illuminator

Referring to Fig. 21, a compact illuminator 900 may be employed as the light source 705. The illuminator 900 includes a housing 905 having reflective, heat-dissipating interior surfaces 910. A light source 915 is positioned in the center of the housing 905. Waveguide collector elements 220 are positioned around the light source.

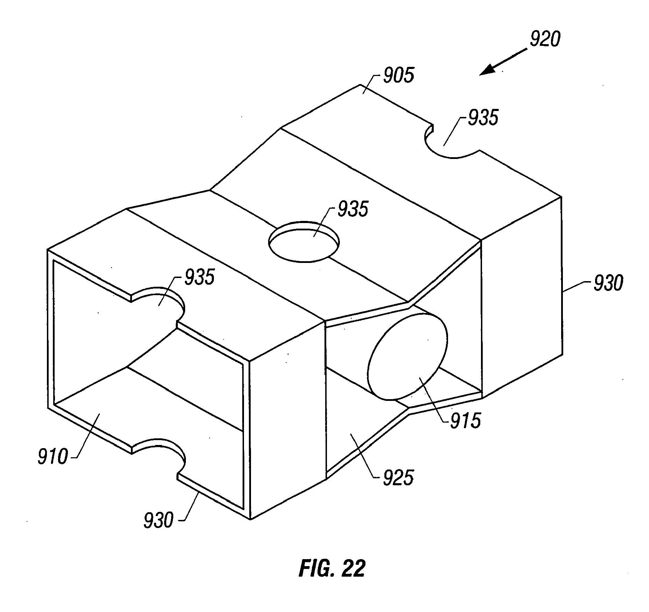

As shown in Fig. 22, another configuration of the compact illuminator 920 includes a reflector 905 with reflective, heat-dissipating surfaces 910. The reflective surfaces 925 nearest the light source 915 are angled to more efficiently direct light to the output ports 930. However, the surfaces 925 may also be curved (e.g., parabolic or elliptical in shape) rather than planar. The reflector 905 includes vent holes 935 to reduce heat in the compact illuminator 920. The reflector 905 is easily formed from one or two pieces of stamped metal; resulting in low manufacturing costs. The reflective surfaces 925 may be formed by vapor deposition on plastic or other materials.

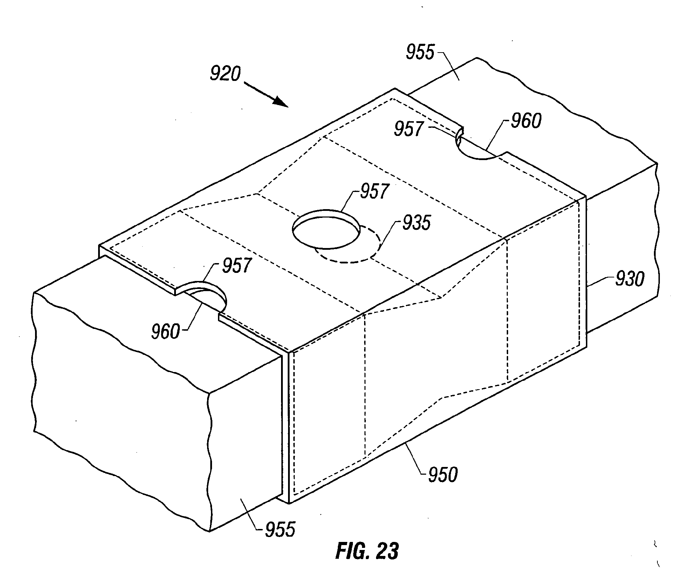

As shown in Fig. 23, the compact illuminator 920 may have a housing 950 that surrounds the reflector 905. The housing may extend beyond the edges of the output ports 930 to provide support for optical waveguides 955 positioned at the output ports 930. The waveguides 955 may be abutted to rectangular output ports 930 and may have input faces that are the same size as the output ports 930. Alternatively, the output ports 930 and waveguides 955 may be round. In addition, fiber optic conduits may be used in place of the waveguides 955. Such a configuration provides for an efficient collection of light from the light source. The housing 950 includes vent holes 957 that are aligned with the vent holes 935 of the reflector 905.

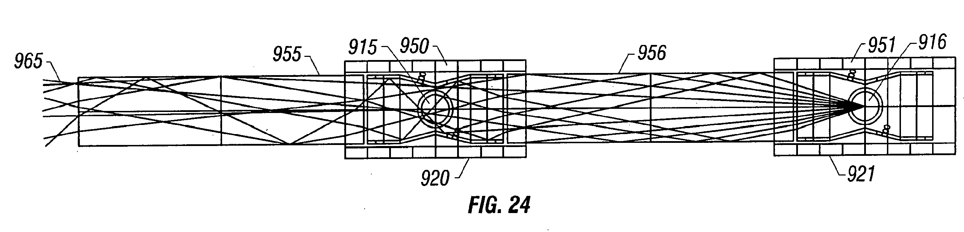

Fig. 24 shows an example of light rays 965 passing through a network of redundant compact illuminators 920 and 921. The illuminators have housings 950 and 951 and are connected by optical waveguides 955 and 956. The illuminators also may be joined directly without an intervening waveguide. The light rays 965 initiate at a first light source 916 in the first illuminator 921. The light rays 965 pass through a waveguide 956 connected to the second illuminator 920, pass through the second illuminator 820 and are output to a second waveguide 955. The second waveguide 955 may lead to a distribution network or to an output device such as an interior light for a vehicle.

Such a configuration conveniently provides light source redundancy. If both light sources 915 and 916 are functioning, then a portion of the light from the second light source 915 combines with the light received from the first light source 916 within the second illuminator 920. The combined light is output to the second waveguide 955. If one of the light sources fails; the other source will continue to provide light to the output device or distribution network, though at a reduced light level.

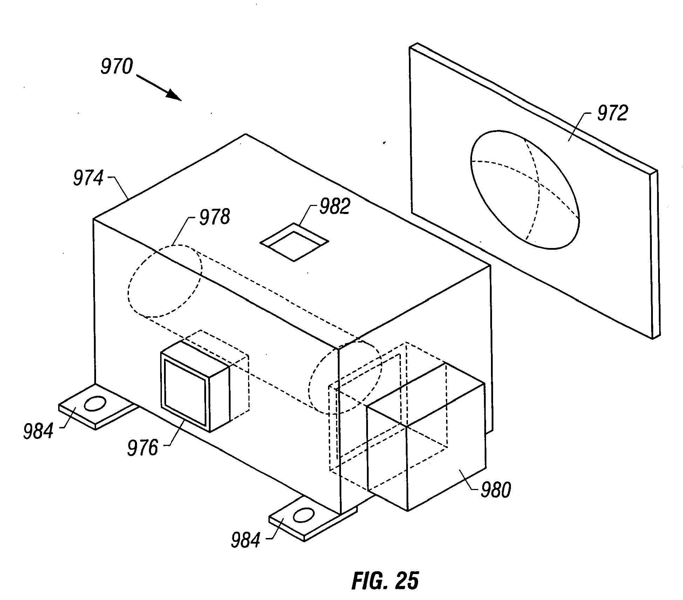

Fig. 25 shows a dual-source, hybrid compact illuminator 970 that provides a direct lighting function through a lens. 972 covering one side of the housing 974 and a distributed lighting function through a waveguide output port 976. The housing 974 may be formed of metal or plastic (e.g., injected molded plastic). The hybrid compact illuminator 870 has reflective interior walls and a primary light source 978, such as a cartridge bulb. The interior walls may be curved to form a reflector to increase light collection efficiency. The waveguide output port 976 is configured so that an optical waveguide may be inserted into the port and held in position with an adhesive, such as epoxy, or by mechanical means, such as a waveguide connector. The waveguide output port 976 is positioned so that the input face of the inserted optical waveguide efficiently receives light from the primary light source. The end of the inserted waveguide may have optical collector elements or lenses formed on the input face, as described above.

The dual-source hybrid compact illuminator 970 also has a secondary light source, e.g., a cartridge bulb or a PC bulb, in a compartment 980 that protrudes from the side of the housing 974 (a single-source, hybrid compact illuminator having only a primary light source is also possible). The secondary light source may be used for lighting functions that require a lower power, longer life light source. The compartment 980 may have a waveguide output port to provide a distributed lighting function or an output lens to provide a direct lighting function.

Alternatively, the compartment 980 may be open to the interior of the housing and may extend into the housing. The compartment may be positioned so that the secondary light source provides illumination for the direct and distributed lighting functions in case of failure of the primary light source 978. Vent holes 982 and installation mounting holes 984 also are provided.

The compact illuminator has a compact size, stays cool, and reduces lamp placement error, which increases efficiency. The compact illuminator also provides a convenient building block for a redundant network to provide interior or exterior lighting functions and may easily be installed in a distributed lighting system. In addition, the hybrid compact illuminator provides both direct and distributed lighting functions.

By combining two sources in a single unit, the dual-source, hybrid compact illuminator provides both light for several lighting functions, as well as light source redundancy, while lowering complexity and manufacturing costs. For example, a single circuit may be used to drive the two sources. In addition, the dual-source unit reduces the number of parts in a system, which in turn reduces cost and complexity.

<u>Waveguide Structures</u>

The DLS incorporates different types of optical waveguide structures to distribute light throughout the vehicle. These include joints, elements with epoxy coatings, pinched end collector portions, integrated installation snaps, integrated input optics and integrated output lenses. The DLS also includes waveguide structures to provide illumination to portions of the vehicle interior, including cup holders, assist grips, and storage pockets.

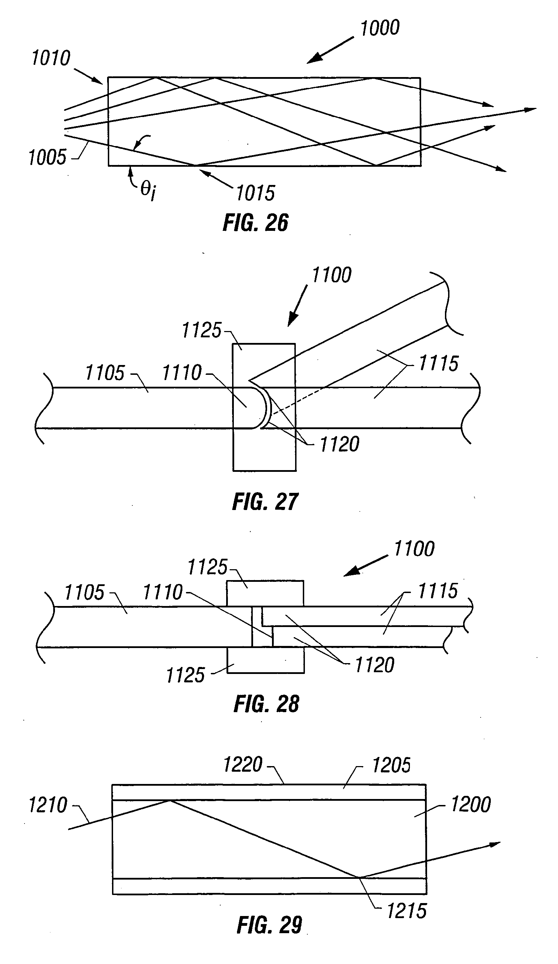

Different types of waveguide structures may be used in the DLS to transmit light from the sources to the lighting outputs. Referring to Fig. 26, a basic waveguide 1000 may be formed from optically transparent material such as acrylic or glass. If the waveguide is formed from acrylic or a similar material, it can be manufactured using an injection molding process. The manufacture of waveguide elements using injection molding results in very low manufacturing costs compared to fiber optics. In addition, molded acrylic waveguide elements are more rigid than fiber optics, can be installed by robots, and generally do not require maintenance. Waveguide elements can also achieve much smaller bend radii than fiber.

A light ray 1005 enters through the input face 1010 proceeds through the waveguide 1000 until the light ray 1005 reaches an outer surface 1015 of the waveguide 1000 (i.e., an interface between the material of the waveguide 1000 and air). At the outer surface 1015, light is reflected in accordance with Snell's law. If the angle of incidence ($\theta_i$) of the light-ray 1005 at the outer surface 1015 is less than a threshold referred to as the critical angle ($\theta_c$), then the light ray 1005 is reflected internally, with no light escaping. This phenomenon is known as total internal reflection. The critical angle depends on the index of refraction of the material of which the waveguide is composed relative to that of the material surrounding the waveguide, (e.g., air). For example, if the waveguide were made from acrylic, which has an index of refraction of approximately 1.5, and surrounded by air, the critical angle, $\theta_c$, would be:

$$\theta_c = \text{arcsin } (n_a/n_b) = \text{arcsin } (1/1.5) = 41.8$$

where $n_a$ is the index of refraction of air (1.0) and $n_b$ is the index of refraction of acrylic (1.5)

Waveguide Joint

Referring to Figs. 27 and 28, a waveguide joint 1100 may be used to distribute light in the DLS. For example, the joint may be used to provide light to a door of the vehicle. The waveguide joint 1100 has a trunk section 1105 with a convex curved end 1110. Branch sections 1115 having convex curved ends 1120 adjoin the trunk section 1105. The branch sections may be held in place by a plastic band 1125 surrounding the joint region or by epoxy or snaps. Light input to the trunk section 1105 is essentially split among the branches 1115. The branches 1115 may be positioned to carry light to different sections of the vehicle. With this configuration, it is possible to reconfigure the branches 1115 in the event of design changes. Epoxy that has an index of refraction approximately equal to that of the waveguide, i.e., that is index-matched, may be used to hold the branches 1115 in place. The joint 1100 may have only a single branch 1115 that is used to change the direction of the trunk 1105 or to provide a hinged connection. A hinged connection using the joint 1100 may be installed, for example, in a car door. Index-matched fluid may be used to lubricate and reduce discontinuity at the interface between the trunk 1105 and the branch 1115, which will reduce the loss through the joint 1100.

Epoxy Coating

Referring to Fig. 29, a waveguide core 1200 may be encased in a layer of epoxy 1205. The epoxy 1205 coating 1205 may be applied by dipping the waveguide core 1200 (which may be formed, for example, from acrylic) in a reservoir of epoxy and allowing the coating to dry or by spraying. The epoxy 1205 has a lower index of refraction than the waveguide 1200, so that most of the light rays 1210 passing through the waveguide core 1200 are internally reflected at the acrylic/epoxy interface 1215. A portion of the light rays are reflected at the outer epoxy/air interface 1220. The distribution of light in the waveguide peaks at the center of the waveguide and diminishes toward the edges of the waveguide. Overall, a significant portion of the light is confined within the waveguide core and only a small portion of the light reaches the outer epoxy/air boundary 1220.

The epoxy coating 1205 offers several advantages compared to an uncoated waveguide. For example, contaminants on the surface of an uncoated waveguide can cause light at the waveguide/air interface to be scattered and transmitted outside of the waveguide instead of being internally reflected, which increases loss in the uncoated waveguide. The epoxy layer 1205 increases the distance between the contaminants and the waveguide core 1200, which reduces the amount of light that reaches the waveguide/air interface 1220 of the coated waveguide. In addition, plastic coatings can be applied to the outside surfaces of the epoxy layer, and clamps and other fixtures can be attached to the outside surfaces with reduced effect on light transmission through the waveguide 1200. One also could use a waveguide formed from polycarbonate (which has an index refraction of 1.58) with an outer coating of epoxy (which has an index refraction of 1.4). Alternatively, one could use a waveguide having a glass core and an outer coating having a lower index of refraction.

Waveguide with Pinched End

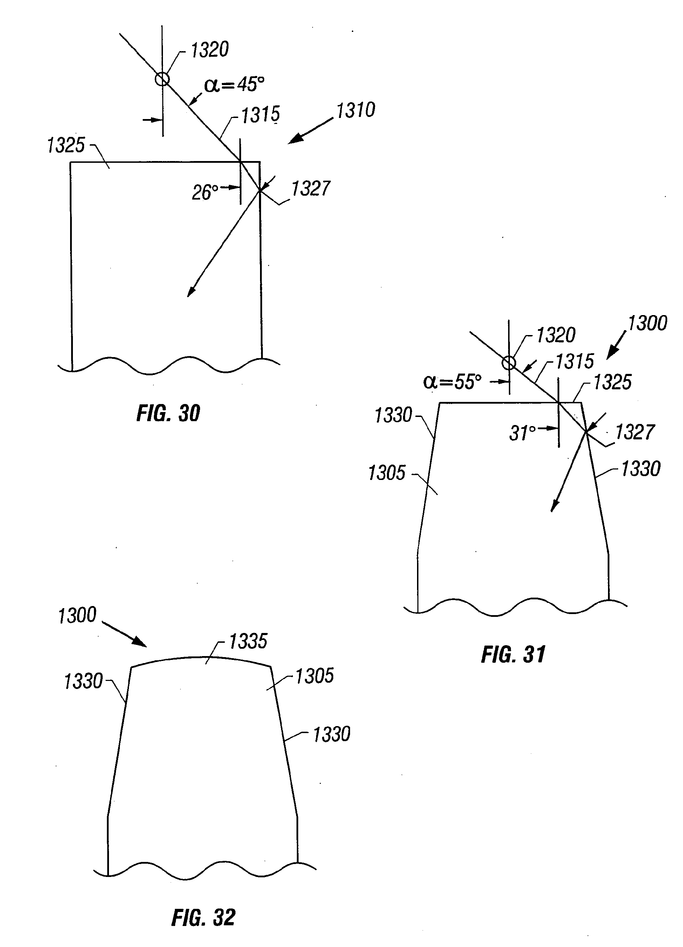

As shown in Figs. 30-32, a waveguide 1300 may have a pinched end that acts as a collector element 1305.

The collector element 1305 increases the acceptance angle ($\alpha$) of the waveguide 1300 and thereby increases light collection efficiency. The end of the waveguide 1300 may be pinched in two dimensions to form an essentially trapezoidally shaped collector element 1305. The collector element 1305 may be formed on the end of a waveguide having a cross-section that is rectangular, round, or of some other shape.

For example, Fig. 30 shows a waveguide 1310 without a pinched end. Light 1315 from a light source 1320 enters the waveguide 1310 at an angle of 45°. At the input face 1325, the light is bent in accordance with Snell's Law to form an angle of 26° with respect to a direction perpendicular to the input face 1325. The light reaches the outer edge 1327 of the waveguide at an angle of 26° and is confined within the waveguide by internal reflection.

Fig. 31 shows a waveguide 1300 with a pinched end. Light enters the input face at an angle of 55°. Hence, the acceptance angle of the pinched waveguide 1300 can be made greater than the acceptance angle of the waveguide 1310 without the pinched end. At the input face 1325, the light is bent to form an angle of 31° with respect to a direction perpendicular to the input face 1325. The light reaches the outer edge 1327 of the waveguide at an angle of 26° (since the inclined walls 1330 of the pinched portion are angled inward by 5°) and is confined within the waveguide by internal reflection.

As shown in Fig. 32, the pinched end of the waveguide 1300 may be formed so that an excess of material at the tip of the waveguide 1300 bulges outward to form a lens 1335 with a desired focal length. The lens 1335 focuses received light, further increasing the acceptance angle of the waveguide 1300.

Integrated Installation and Connection Elements

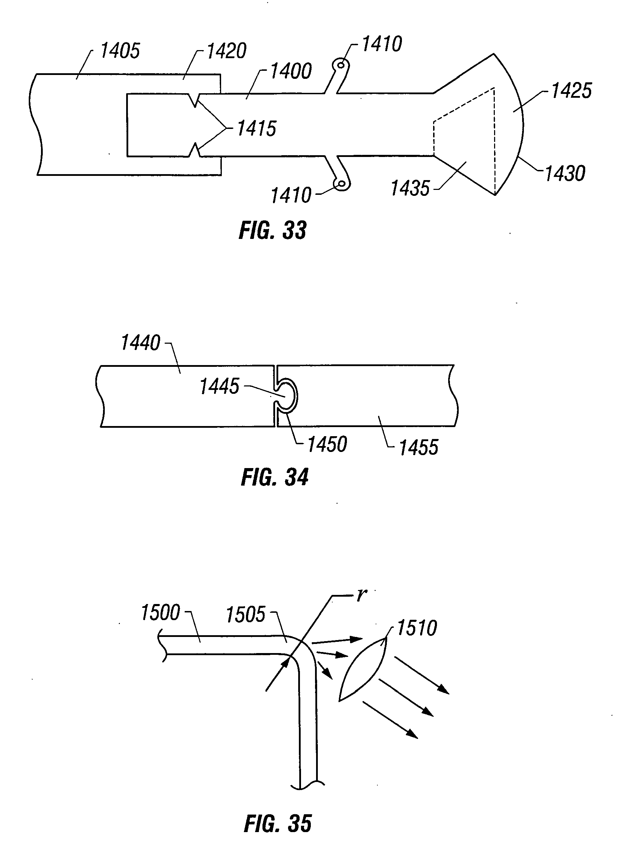

The waveguides may be formed as a set of standard components that may be easily interconnected and used as building blocks for different applications. For example, Fig. 33 shows waveguides 1400 and 1405 having integrated installation elements, such as snaps 1410 and detents 1415. Snaps 1410 can be formed during the injection molding of the waveguide 1400 and provide a convenient means for securing the waveguide 1400 within the vehicle. The snaps are sized and angled to minimize light loss through the snap. For example, the snap may form a 60° angle with the waveguide (toward the direction that light is travelling though the waveguide). The.vehicle may have brackets to receive the snaps 1410 or a screw may be inserted into a snap 1410 to secure the waveguide to a mounting surface. The detents 1415 enable the waveguide 1400 to be securely connected to another waveguide 1405 having an integrated claw structure 1420. Each waveguide may be formed with a detent 1415 at one end and a claw structure 1420 at the other.

Fig. 34 shows waveguides with integrated connection elements. A waveguide 1440 may have a key 1445 formed at one end. The key 1445 is configured to mate with a socket 1450 of another waveguide 1455. These connection elements may cause a loss of approximately 4% at each interface, however, the connection elements increase the ease with which waveguide components can be installed. Index-matched epoxy or fluid may be used at the interface to secure the connection and reduce losses.

In addition to the installation and connection elements, the waveguide 1400 widens at one end into an output element 1425 having a convex curved surface 1430. The curved surface 1430 of the output element 1425 essentially acts as a lens to provide a desired light output characteristic. The output element 1425 may form an illumination element for the vehicle, e.g., a courtesy light in the door of a vehicle. A portion of the widened waveguide end may be eliminated, leaving an air gap 1435, while maintaining desired output characteristics. The air gap 1435 decreases the weight and cost of the waveguide 1400.

Leaky Bend

Another configuration for an output element is shown in Fig. 35. A waveguide 1500 has a bend 1505 that is configured to allow a portion of the light travelling in the waveguide to escape at the bend 1505. A lens 1510 may be used to focus the light to form a desired beam pattern. The amount of light released at the bend 1505 (or reflected back toward the input) can be controlled by determining the inner radius (r) of curvature of the bend 1505 relative to the width (w) of the waveguide. 1500. For example, a bend with a inner bend radius to waveguide width ratio (r/w) of 3:1 will result in a loss of less than 5% of the total light in the waveguide (the losses including light released at the bend and light reflected back toward the input). A bend ratio of 1:1 will result in a loss of approximately 30-35%, and a bend ratio of 0.1:1 will result in a loss of approximately 65-70%. Not all of the light lost in the waveguide enters the lens, however the amount of light entering the lens will be proportional to the amount of light released at the bend.

Optical Manifold

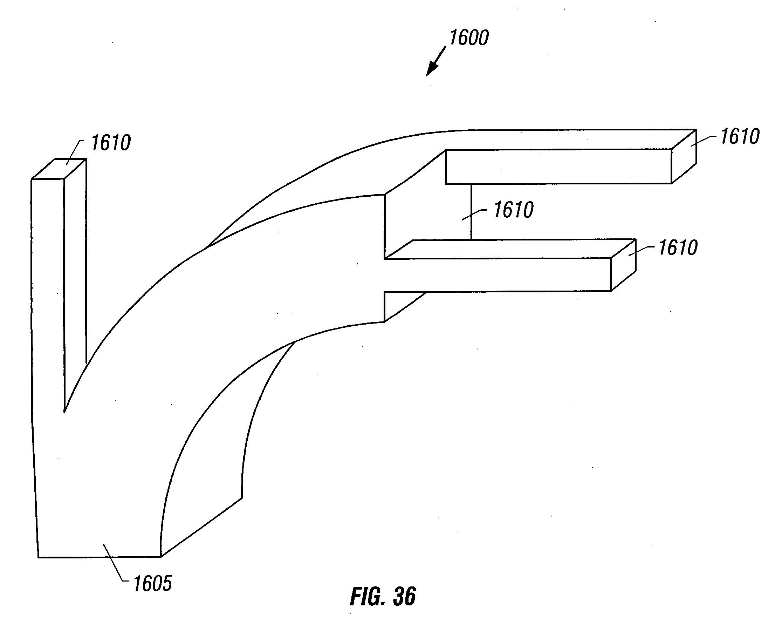

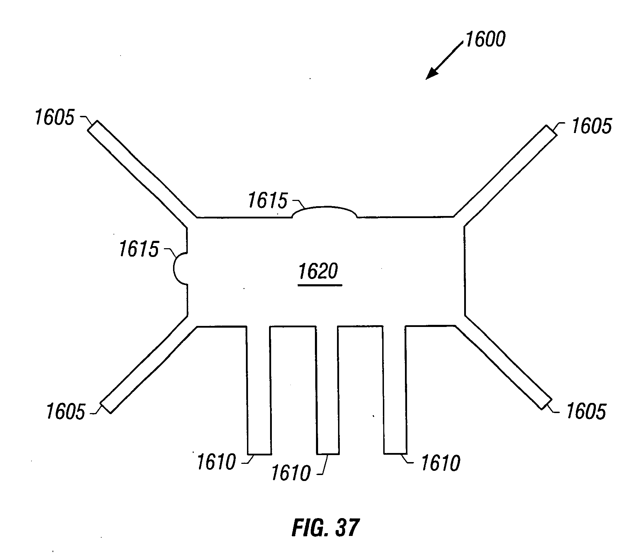

Referring to Figs. 36 and 37, an optical manifold 1600 is another useful building block for a DLS. Light enters the optical manifold 1600 through one or more inputs 1605 and-is split to one or more of the output arms 1610. Alternatively, light may enter through one or more output arms 1610 and exit through the inputs 1605. The output arms 1610 may branch off at multiple points from the optical manifold in multiple directions to direct light to other subsystems of the DLS in various locations within the vehicle. The size of the output arms 1610 and their locations determines the proportion of the light input to the manifold that is split to each arm.

As shown in Fig. 37, the optical manifold 1600 may include integrated output elements 1615. The output element 1615 may be lens-like structures that provide lighting functions within the vehicle, such as a reading lights or dashboard lights. The manifold 1600 may have multiple input arms 1605 and output arms 1610, as well as a portion 1620 where light from the various inputs is combined. Each input and output may use colored filters to achieve desired lighting effects.

Waveguide Collar

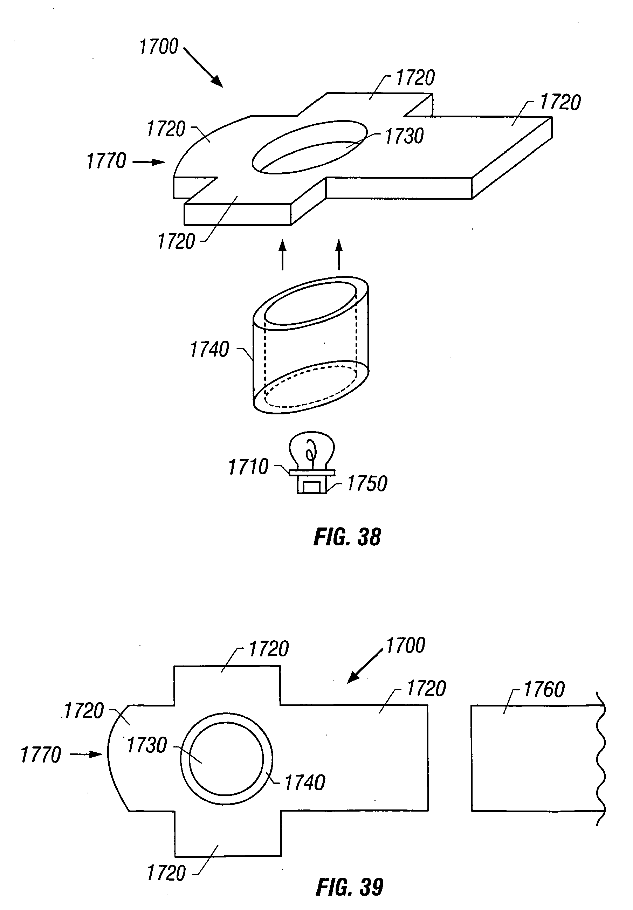

Referring to Figs. 38-45, a DLS may incorporate optical waveguide structures that provide an integrated structure for collecting and distributing light from a light source. These structures may be referred to as waveguide collars. In general, a waveguide collar 1700 collects light from a light source 1710 and divides the light among output arms 1720 that extend from the light source 1710. The arms lie in an azimuthal plane relative to the light source.

For example, as shown in Fig. 38, the waveguide collar 1700 is a planar structure in the shape of a cross. The collar 1700 has four output arms 1720 and an opening 1730 in the center for accommodating a light source 1710. The number of arms may vary. The light source 1710 may be enclosed in a cylindrical sleeve 1740, which is inserted into the opening 1730 in the waveguide collar 1700. Light from the light source passes through the sleeve 1740 into the collar 1700, where it is divided into the output arms 1720. The cylindrical sleeve 1740 may be used with any of the waveguide collar configurations discussed below. Several waveguide collars-1700 may be stacked on a single sleeve 1740 to form a multi-layer structure. In addition, the cylindrical sleeve 1740 may be connected to of integrated with the base 1750 of the light source as discussed below.

The output arms 1720 of the waveguide collar 1700 may be connected to other components in the DLS or may have integrated output elements, such as a lens 1770. The lens 1770, which is located at the end of the output arm 1720, transmits light away from the waveguide to provide illumination for the interior or exterior of the vehicle. Waveguides 1760 may be connected to the output arms 1720, as shown in Fig. 39. Integrated installation elements, such as the snaps, claws and detents described above with respect to Figs. 17A and 17B, may be used to connect the waveguides to the output arms.

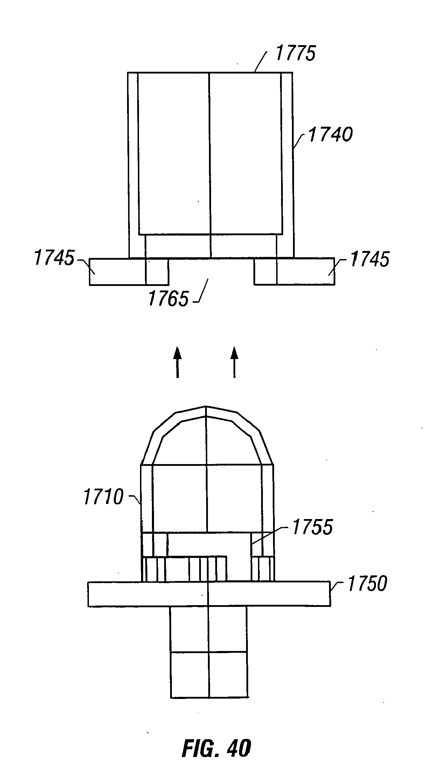

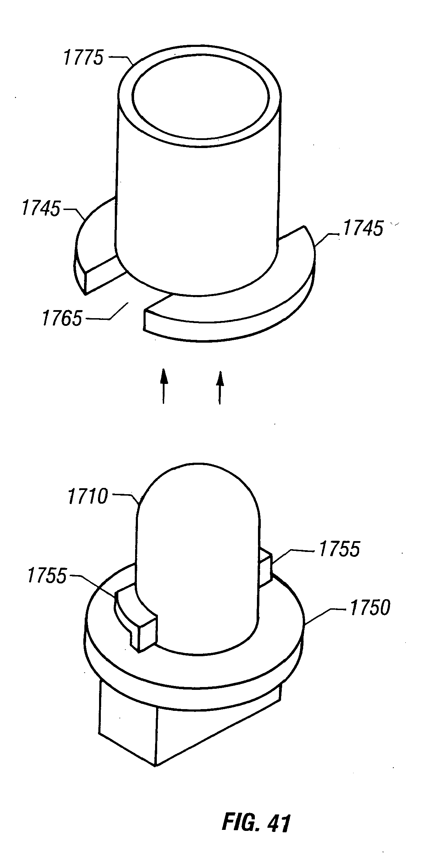

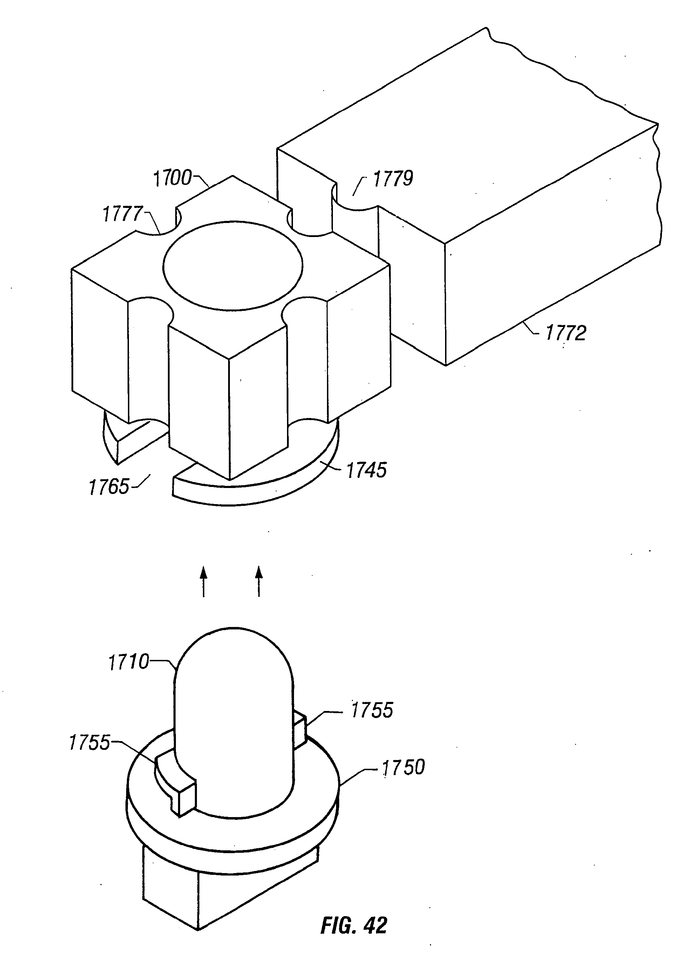

As shown in Figs. 40 and 41, the cylindrical sleeve 1740 may have a rim 1745 for connection to the lamp base 1750. The lamp base has locking tabs 1755 which may be inserted into the gap 1765 between the rim 1745 portions of the sleeve 1740. The lamp base is twisted so the locking tabs engage the rim 1745 and hold the light source 1710 in place within the sleeve 1740. Alternatively, as shown in Fig. 42, a waveguide collar 1700 may have an integrated rim 1745 for connection to a lamp base 1750. The collar may have alignment notches 1777 configured to accommodate alignment tabs 1779 on the end of a connecting waveguide 1772.

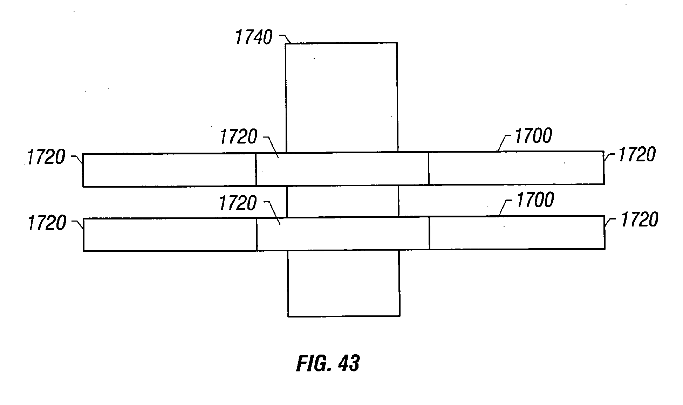

The sleeve 1740 provides several advantages. For example, as shown in Fig. 43, multiple waveguide collars 1700 can be stacked on a single sleeve 1740, allowing light to be distributed through multiple collars 1700 with a single light source 1710. Such a configuration increases system design flexibility.

In addition, the upper portion of the sleeve 1740 reflects a portion of the light from the light source 1710 through internal reflection so that the light exits from the top 1775 of the sleeve. Light entering the sleeve at an angle less than the critical angle passes through the sleeve and enters the waveguide collar 1700 (the angle being measured with respect to a direction perpendicular to the sleeve wall). Light entering the sleeve at an angle greater than the critical angle is internally reflected by the sleeve. In this manner, the sleeve forms a hybrid lighting system that allows the light source 1710 to function as a source for both a direct lighting function (through the top of the sleeve) and a distributed lighting function (through a network connected to a waveguide collar).

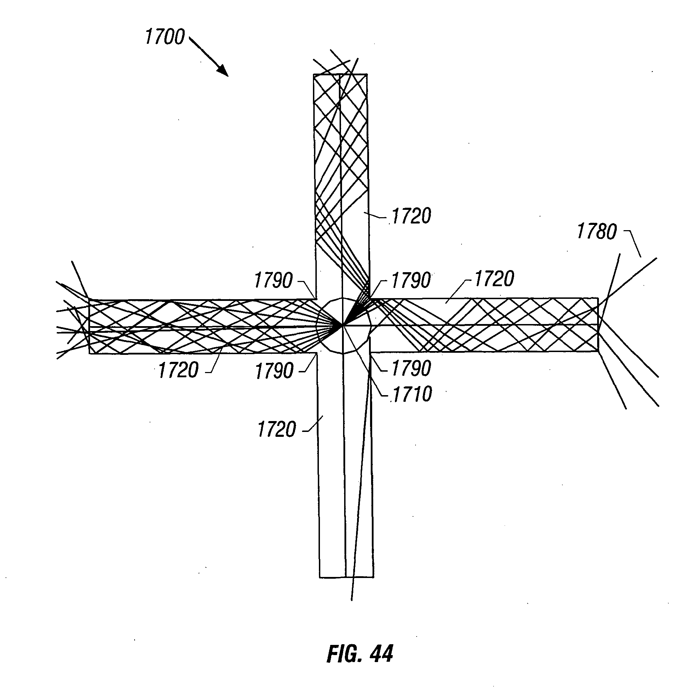

Fig. 44 shows a light ray 1760 diagram for a four-arm waveguide collar 1700. For reasons of clarity, only a portion of the light rays 1780 from the light source 1710 are traced in the diagram. Ordinarily, light emanates uniformly from the light source 1710 in the plane of the waveguide collar (the azimuthal plane). The waveguide collar collects light from the light source and divides it among the four output arms 1720. In this example, the vertices 1790 are positioned relative to the light source 1710 so that essentially all of the light collected is distributed into one of the output arms 1720 (light does not escape at the vertices 1790).

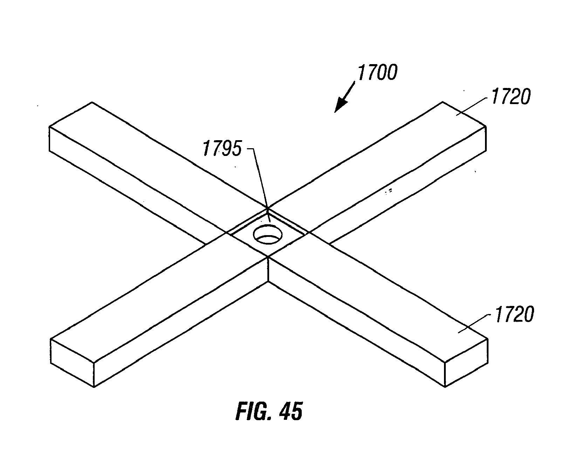

Fig. 45 shows a perspective view of a four-arm waveguide collar 1700. The central portion 1795 may be tapered or stepped to improve the light collection efficiency with respect to the light source.

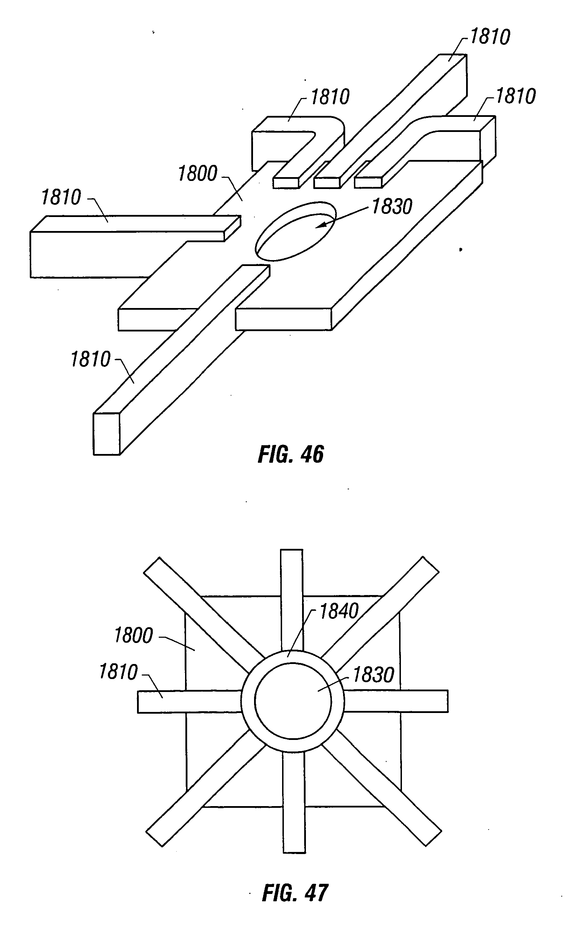

Figs. 46 and 47 show alternative configurations of a waveguide collar 1800. The collar 1800 is a planar structure that surrounds and collects light from a light source (not shown) positioned in an opening 1815 in the center of the collar 1800. Waveguides 1810 may be mounted on the top surface of the collar 1800 or may be embedded in the collar as shown in Fig. 47. The waveguides 1810 may be positioned radially with respect to the light source, as shown in Fig. 47. A cylindrical sleeve 1840 may surround the light source, as described above. The collar 1800 serves as a hybrid lighting element by providing both a direct lighting function (in the direction perpendicular to the plane of the collar) and a distributed lighting function (through the connected waveguides)

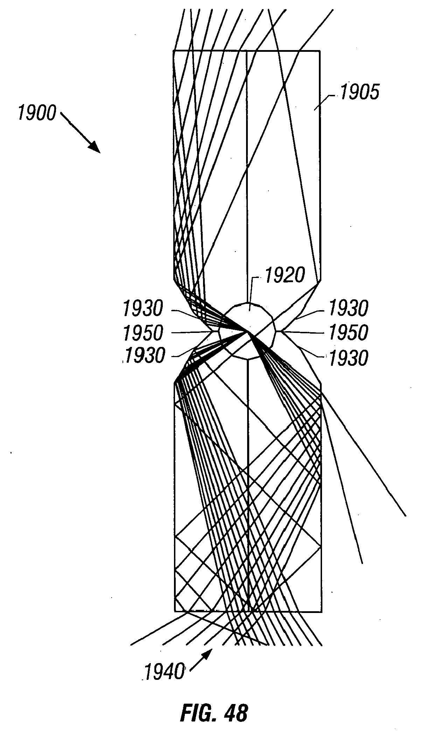

Fig. 48 shows another alternative configuration of a waveguide collar 1900. The collar has two arms 1905 that extend from opposite sides of the light source opening 1920. The sides of the output arms include convex, curved surfaces 1930 at the center of the collar 1900. As shown by the light ray tracings 1940, the curved surfaces 1930 at the vertices 1950 improve light collection by reflecting light that would have been transmitted out of the sides of the collar (if the sides were not curved) and directing the light into the two output arms.

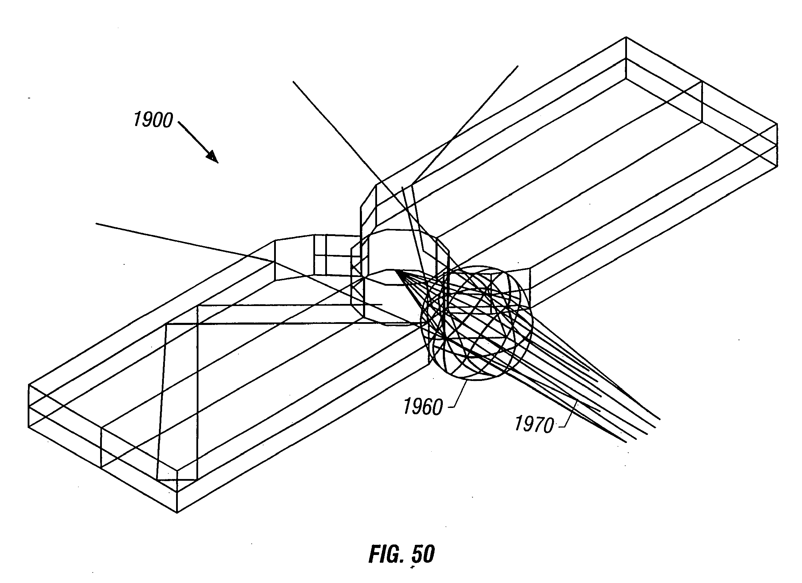

As shown in Figs, 49 and 50, optical components, such as lens 1960, may be positioned at the vertices 1950 of the curved surfaces 1930. The lens 1960 may be formed along with the rest of the waveguide collar in a single injection molding step. The lens 1960 may have a variety of shapes, such as cylindrical, spherical, parabolic, Fresnel, or polyhedral. The lens 1960 receives light through the side facing the light source, focuses light through internal reflection, and outputs the light through the opposite side. The output light rays 1970, as shown in Fig. 50, are focused and, as such, tend to converge at a derived distance from the lens 1960.

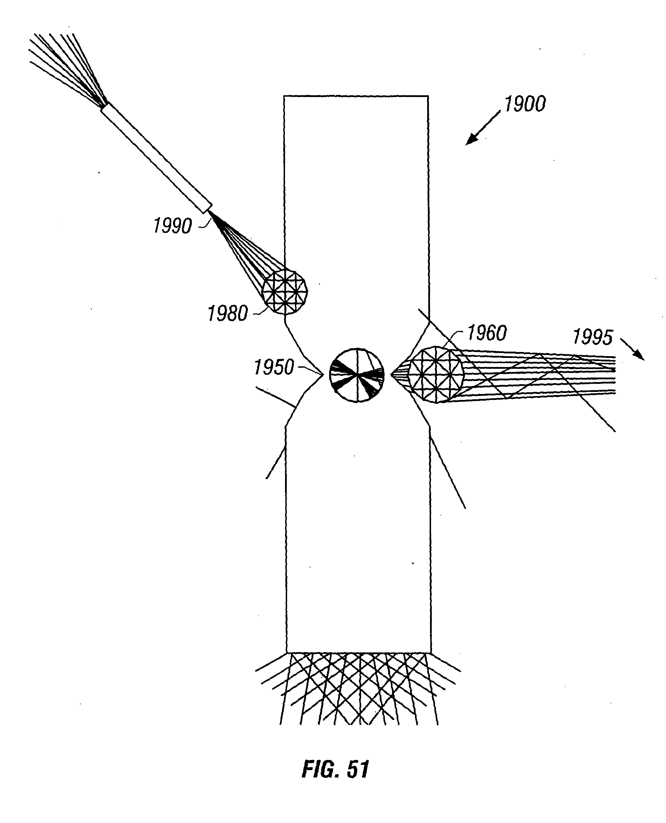

As shown in Fig. 51, a lens 1980 also may be positioned at points on the waveguide collar other than the vertices 1950. The light output by the lenses 1960 and 1980 may be focused, for example, on the input of a waveguide 1990 or on a target location 1995 on the interior or exterior of a vehicle, such as a keyhole. The molded integral lenses provide several advantages. For example, a waveguide collar with a lens serves as a hybrid lighting element, i.e., the collar performs both a direct lighting function and a distributed lighting function. In addition, system complexity and manufacturing costs may be reduced by having a one-step, injection molding manufacturing process.

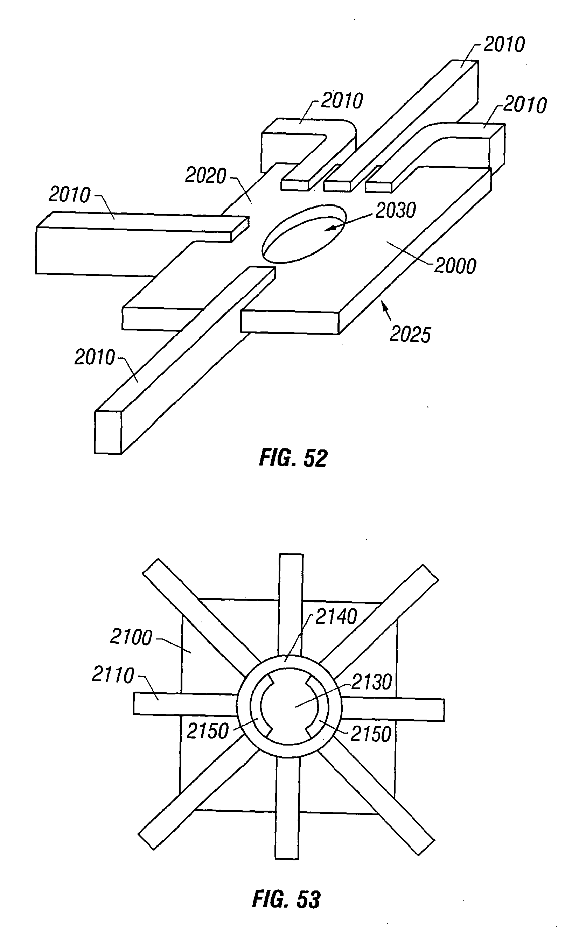

Fig. 52 shows another waveguide structure 2000 for collecting and distributing light from a light source. The structure 2000 is a planar element that has embedded waveguides 2010 that extend from top 2020 and bottom 2025 surfaces. The structure 2000 surrounds and collects light from a light source (not shown) positioned in an opening 2030. The structure 2000 provides an efficient means for distributing the light collected from the light source. For example, the structure 2000 may be mounted in the door panel or head liner of a vehicle. The waveguides 2010 may carry light to various light output points on the door panel or head liner for providing interior vehicle illumination.

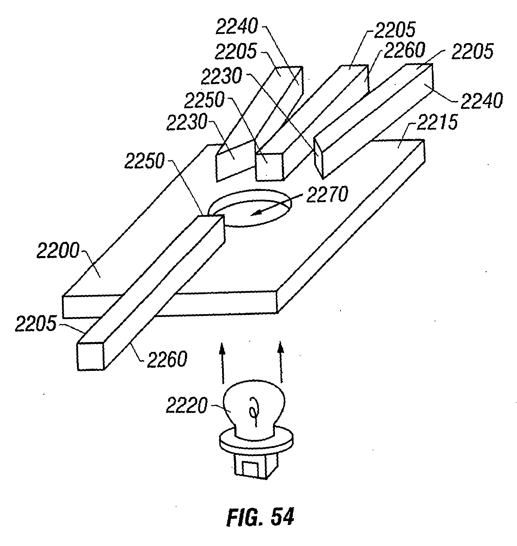

The structure 2000 may be formed integrally with the waveguides 2010 and may, for example, be formed of plastic or acrylic using injection molding. The waveguides 2010 may be embedded in the waveguide structure 2000, as shown in Fig. 52, or may be raised, i.e., extending from the top surface 2020, as discussed below with reference to Fig. 54.

A similar structure 2100, shown in Fig. 53, has waveguides 2110 that are positioned radially with respect to the light source opening 2130. The waveguides may be raised or embedded. A cylindrical sleeve 2140 may surround the light source, as described above. In addition, tabs 2150 may extend into the opening 2130. The tabs 2150 are configured to mate with locking tabs of a light source to hold the light source in position in the opening 2130.

Fig. 54 shows another similar waveguide structure 2200 in which waveguides 2205 are mounted on a top surface 2215 and extend radially from the light source 2220. The input faces 2230 of some of the waveguides are angled with respect to the sides 2240 of the waveguides, i.e., the input faces 2230 form a non-orthogonal angle with respect to the sides 2240 of the waveguide. The input faces 2250 of other waveguides are orthogonal to the sides 2260 of the waveguide. The light source 2215 is inserted into an opening 2270 in the structure 2200..

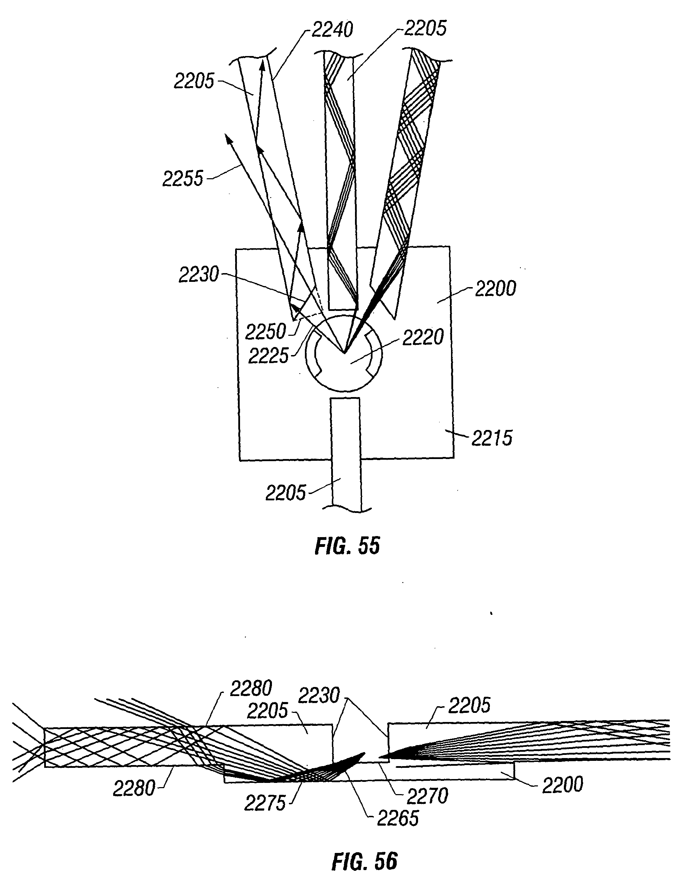

Fig. 55 shows a partial light ray diagram for the structure 2200. A light ray 2225 enters the face 2230 of the waveguide 2205. As discussed above, the face 2230 forms a non-orthogonal angle with respect to the side 2240 of the waveguide 2205. If the input face 2230 were not angled, as indicated by the dashed lines 2250, a light ray 2255 could enter the side 2240 of the waveguide and pass through the opposite side of the waveguide instead of being internally reflected. Hence, this configuration helps reduce the amount of light entering the side 2260 of the waveguide rather than the input face 2230. It also allows the waveguides 2205 to be positioned closer together, which prevents light from passing through gaps between the waveguides.

Fig. 56 shows a side light ray diagram for the waveguide structure 2200. Some of the light from the light source, which is positioned in the opening 2270 in the structure 2200, directly enters the input face 2230 of the waveguide 2205. A portion 2265 of the light from the light source may be reflected from the bottom surface 2275 of the structure and may enter the waveguide 2205 through a side surface 2280.

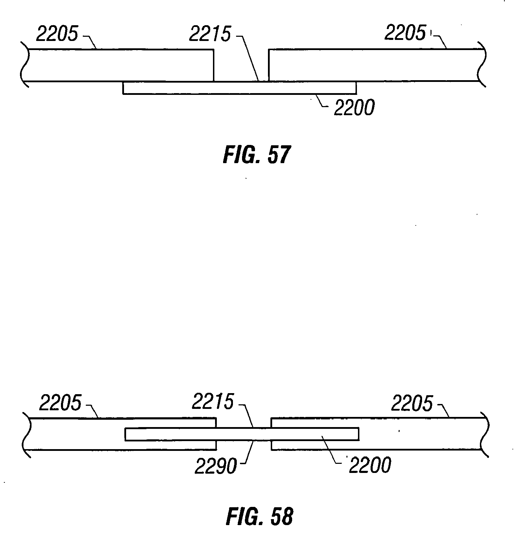

As shown in Fig. 57, the waveguides may be attached to the top surface 2215 of the structure 2200 by adhesive. They also may be attached by installation elements integrated into the structure and waveguides, such as snaps. Alternatively, the waveguides 2205 and structure 2200 may be formed from a solid piece of material, for example, injection-molded plastic or acrylic.

As shown in Fig. 58, the waveguides 2205 may extend from the top 2215 and bottom 2290 surfaces of the structure 2200 rather than only from the top surface. The waveguides 2205 may be integrally formed with the structure 2200 from a solid piece of material, or the waveguides 2205 may be fastened to the structure 2200 with snaps or adhesive.

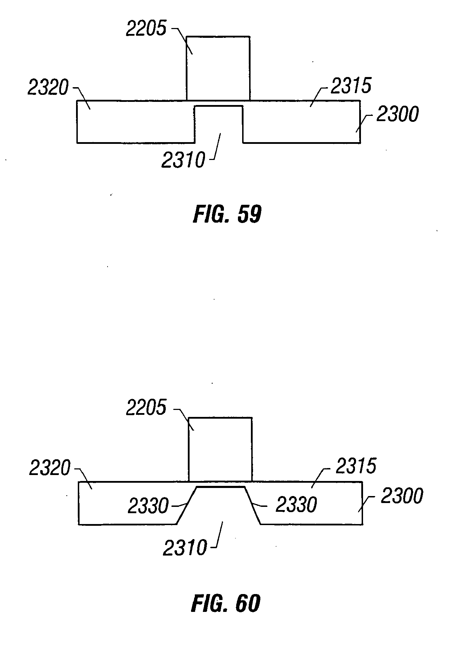

Figs. 59 and 60 show end views of a waveguide mounted on a planar waveguide structure 2300. In Fig. 59, a channel 2310 is formed beneath the waveguide 2205 along the length of the waveguide 2205. The channel 2310 increases the isolation between the waveguide 2205 and the structure 2300 to reduce light loss from the waveguide 2205 and increase efficiency. The channel 2310 may be narrower than the waveguide 2205 and the depth of the channel 2310 may be less than the thickness of the structure 2300 in order to maintain structural support between sections 2315 and 2320 of the structure on either side of the waveguide 2205. As shown in Fig. 60, the sides 2330 of the channel 2310 may be inclined (i.e., the width of the channel may increase in a direction away from the waveguide) to improve structural integrity.

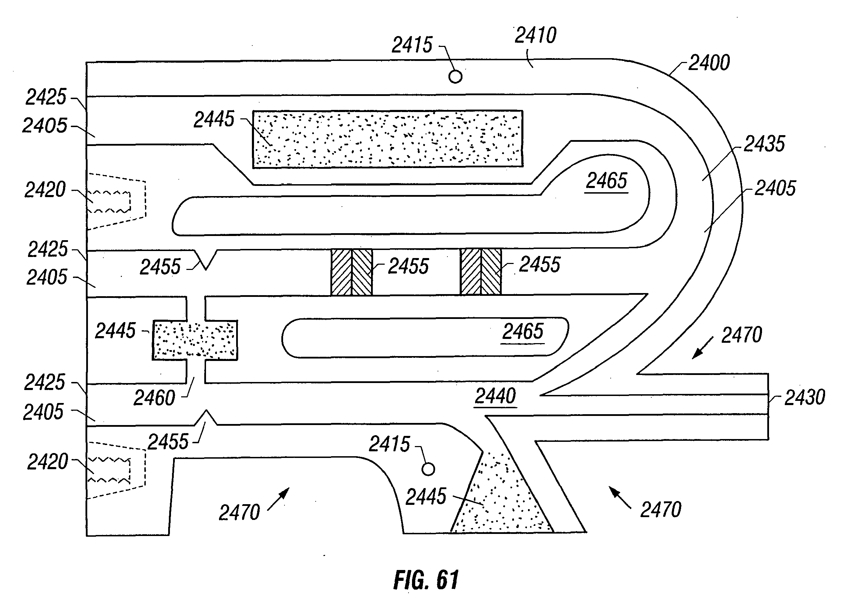

Fig. 61 shows a lighting system 2400 incorporating waveguides 2405 that are mounted on a planar waveguide structure 2410 (in the manner shown in Fig. 57) or embedded in the structure 2410 (in the manner shown in Fig. 58). The structure 2410 and waveguides 2405 may be formed from a single piece of material, such as acrylic, and may be injection molded. The structure may be mounted using screws that insert into screw cavities 2415 formed in the side of the structure 2410. The structure also may be mounted using screw holes 2420 that are orthogonal to the plane of the structure 2410.

The waveguide structure 2410 provides several advantages. For example, the structure 2410 generally has low manufacturing and material costs and is easy to install. The structure 2410 may be screwed or snapped into position in a vehicle dashboard or other location. In addition, the structure 2410 allows light to leak from a waveguide to an adjacent waveguide, if desired, in order to provide redundancy.

The waveguides 2405 have input faces 2425 positioned along a side of the structure. A waveguide output port 2430 is positioned on the opposite side of the structure. The input faces 2425 may receive light from outputs of an adjacent lighting system. The waveguides 2405 have bends 2435 and branches 2440 to carry light to desired locations on the structure 2410.

The top surface of the waveguides may be roughened, for example by sand blasting or bead blasting, to form light output surfaces 2445. Roughened surfaces also may be formed using a mold with rough or stippled surfaces. The surfaces 2445 direct light in the direction orthogonal to the plane of the structure 2410. The light output surfaces 2445 may be used, for example, to provide indicator lights or back lighting for a dashboard. Alternatively, notches 2455 may be formed in the top surface of the waveguides to release light. Notches 2455 also may be formed in the sides of the waveguides to direct light into branch structures 2460, such as a light output surface positioned between two waveguides.

Voids 2465 are formed in the structure 2410 between the waveguides 2405 in order to reduce weight and material costs. Similarly, gaps 2470 may be formed around the perimeter of the structure 2410.

In addition, as shown in Figs. 59 and 60, channels may be formed beneath the waveguides to increase efficiency and to increase isolation between adjacent waveguides. The channels are particularly useful for instances in which high isolation between waveguides is desired. For example, the lighting system may include lighting functions that are not meant to be activated simultaneously.

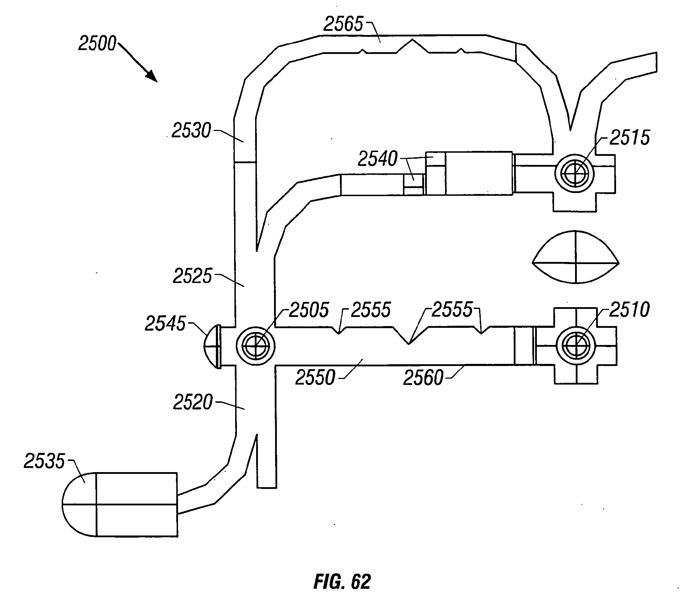

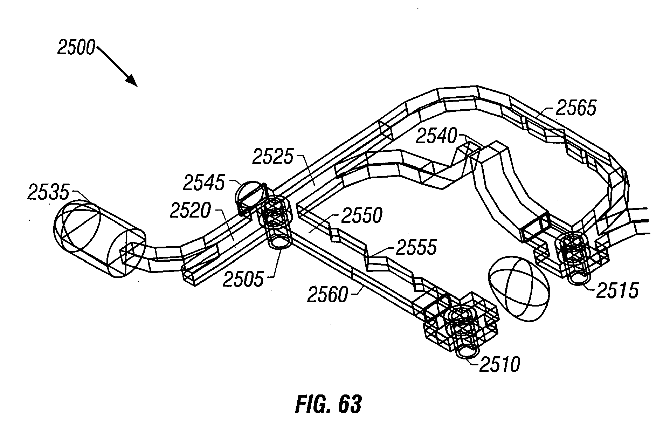

Referring to Figs. 62-66, waveguide collar assemblies may be combined with integrated optical components to form a modular DLS 2500. The modular system provides flexibility and increased efficiency in DLS design and decreases system complexity and manufacturing costs. The modular system also makes it easier to provide light source redundancy.

DLS 2500 includes three light sources 2505, 2510 and 2515 with waveguide collars and integrated molded lens outputs. The first light source 2505 is positioned within a four-arm waveguide collar. The ends of the first 2520 and second 2525 arms split into separate outputs that connect to other waveguides 2530 or terminate in light output elements, such as molded lenses 2535 or open-ended waveguides 2540. The third arm terminates with an integrated molded lens output 2545.

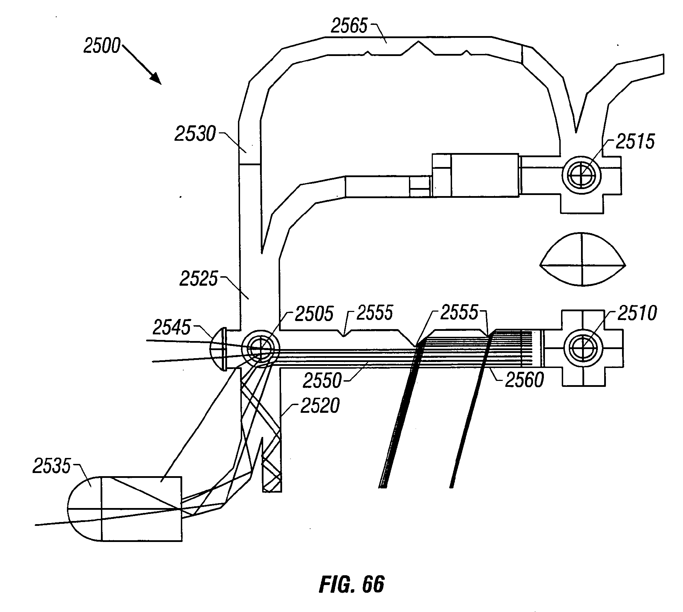

The fourth arm 2550 includes scattering notches 2555 to cause light to be transmitted from the side 2560 of the waveguide, as shown in Fig. 66. Another waveguide 2565 in the system has similar scattering notches. The fourth arm 2550 terminates at a second light source 2510 that is positioned in a waveguide collar. The waveguide collar may be connected to.the output arm with integrated snaps or attached with index-matched epoxy.

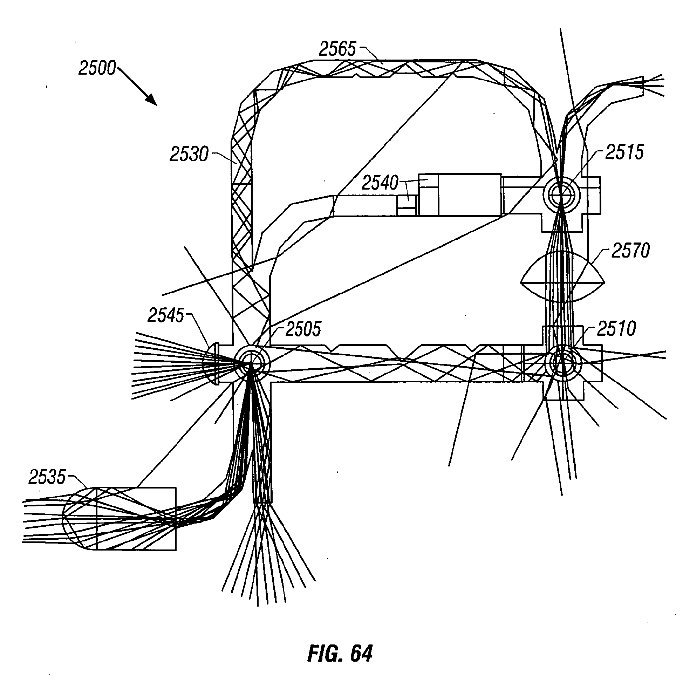

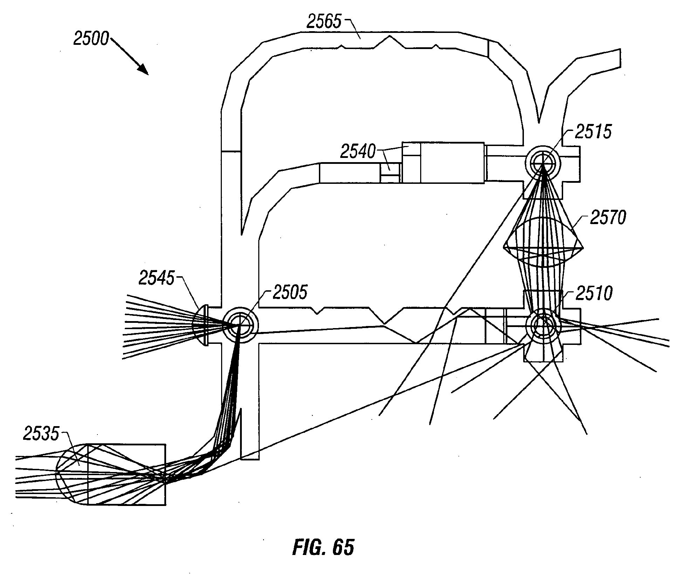

As shown in Figs. 64 and 65, a lens 2570 is positioned between the second 2510 and third 2515 sources. The lens 2570 focuses light output by the third source 2515 so that it can be received by the waveguide collar housing the second source 2510. The received light is distributed by the waveguide collar housing the second source. If the second light source 2510 were to fail, the components attached to the second light source 2510 would still receive light. Hence, the configuration provides light source redundancy. Alternatively, the second and third sources could be connected by a waveguide.

Security/Puddle Light

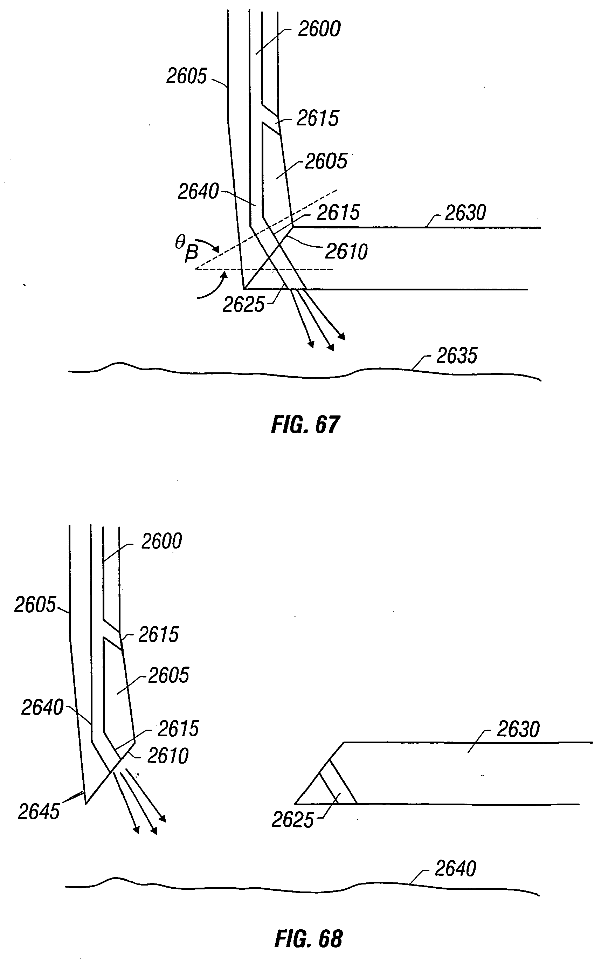

The DLS may be used to provide a variety of other lighting functions for a vehicle. These include exterior lighting, such as security/puddle lights and step-up/running board lights, and interior lighting, such as lighted cup holders, assist grips, door panels, and door handles. Referring to Figs. 67 and 68, a waveguide 2600 may be installed in a vehicle door 2605 to provide a security/puddle light. The waveguide 2600 runs from a light source, such as the hybrid headlamp subsystem 105 (Fig. 1), to the bottom edge 2610 of the door 2605. The waveguide 2600 may have a lens formed at its output end. A waveguide branch 2615 may be used to implement a interior door light. When the door 2605 is closed, as in Fig. 67, a door waveguide section 2615 connects to a waveguide 2625 that passes through the floor 2630. The floor waveguide section 2625 provides a security light that illuminates the area 2635 underneath the vehicle. The ends of the floor waveguide section 2625 may have integrally formed lenses. When the door 2605 is open, as shown in Fig. 68, the door waveguide 2600 provides a puddle light that illuminates the ground 2640 between the open door and the vehicle. The bend 2645 in the door waveguide section 2615 may have a bend angle ($\theta_B$) of, for example, 20°. The bend 2645 helps to direct the output of the waveguide 2600 to the desired area. Alternatively, the security/puddle light may be implemented as a hybrid subsystem that has an independent light source. The independent light source may directly provide interior lighting for the vehicle in addition to being connected to the waveguide 2600 as a light source for the security/puddle light.

Step-Up/Running Board

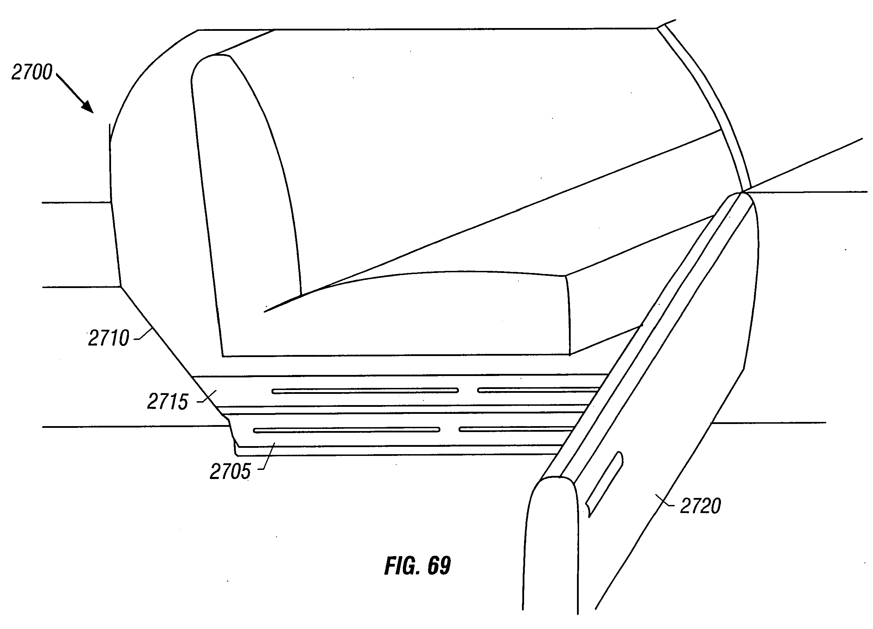

A DLS may be used to provide lighting for vehicle step-ups and running boards. As shown in Fig. 69, a vehicle 2700 includes a running board 2705 that forms a ledge that extends outward from the vehicle 2700 at the base of a door opening 2710. A step-up 2715 is a plate that runs along the door sill at the bottom of the door opening 2710. The step-up 2715 is visible when the door 2720 is open and is covered when the door is closed.

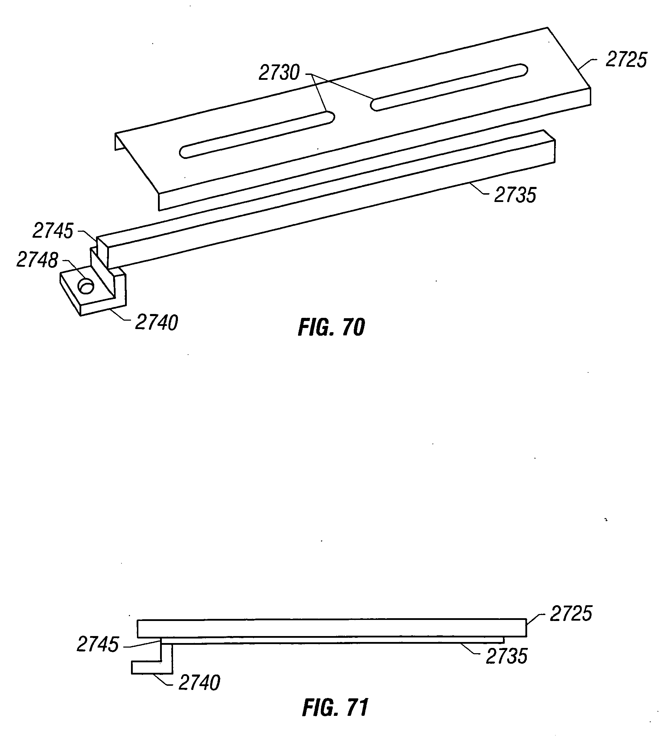

As shown in Figs. 70 and 71, an illuminated step-up or running board has a cover plate 2725 with slots 2730 that run along the length of the plate 2725. The slots 2730 may be covered by a protective plastic plug. A waveguide 2735 is positioned under the plate 2725 so that it runs directly beneath the slots 1235. The waveguide 2735 is configured to gradually release light along its length, as discussed below. A portion of the light released by the waveguide passes through the slots 2730. The waveguide 2735 may continue beyond the end of the step-up or running board to provide light for other lighting functions, such as another step-up or running board. The waveguide 2735 may be chemically hardened to improve durability. A plastic shield (not shown) may be positioned between the waveguide 2735 and the cover plate 2725.

A light receptacle 2740 is positioned at the end of the waveguide 2735 to hold a light source (e.g., a PC bulb) in position near the waveguide input face 2745. The receptacle 2740 may be formed together with the waveguide 2735 as a solid piece of material. The PC bulb is inserted into an opening 2748 in the receptacle 2740. The opening 2748 may have slots (not shown) that mate with locking tabs on the base of the PC bulb. Other types of light sources also may be used. For example, a waveguide carrying light from a remote source (such as a bulb positioned within another step-up or running board) may connected to the waveguide input face 2745. A colored filter may be positioned between the light source and the waveguide input face 2745.

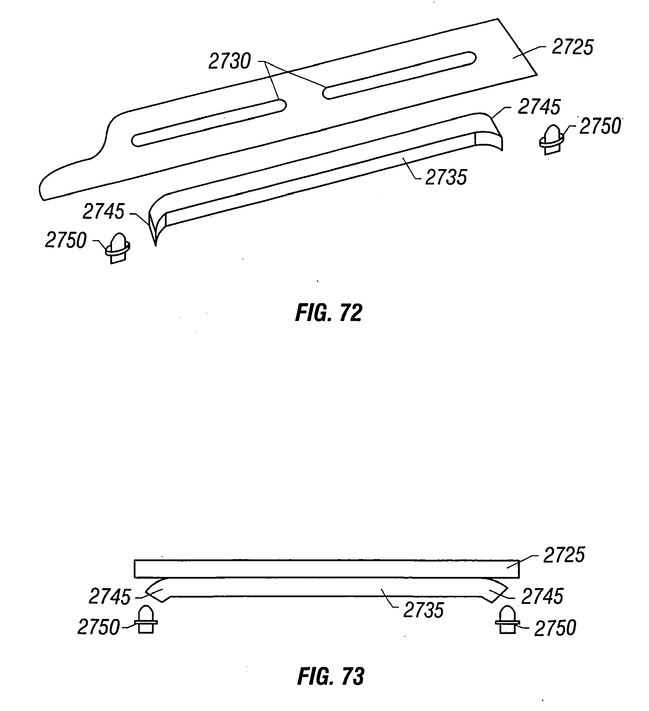

Figs. 72 and 73 show an alternative configuration for an illuminated step-up or running board. A waveguide 2735 is positioned beneath a cover plate 2725 having slots 2730. The ends of the waveguide 2735 bend toward light sources 2750 that are positioned at each end. Such a configuration provides a brighter, more uniform lighting distribution along the length of the step-up or running board. In addition, the light sources 2750 provide redundancy. If one light source fails, illumination is still provided by the other light source, although at a reduced level.

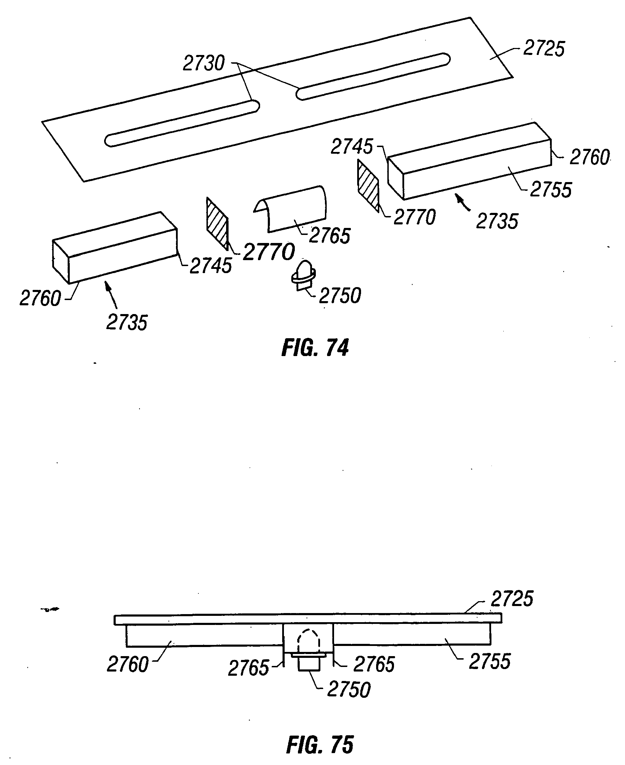

Another configuration for step-up or running board illumination is shown in Figs. 74 and 75. The waveguide 2735 is divided into two sections 2755 and 2760 having input faces 2745. A reflector 2765 is positioned between the input faces. A light source 2750 is positioned within the reflector 2765. Light from the light source 2750 enters the input faces 2745 of the two waveguide sections 2755 and 2760. The reflector 2765 improves the efficiency with which light is collected from the light source 2750 and reduces stray light leakage. Colored filters 2770 may be positioned between the light source 2750 and the input faces 2745.

A compact illuminator, as shown in Figs. 21-25, also may be used as a light source for a step-up or running board. For example, the compact illuminator of Fig. 21 may be used in place of the reflector 2765 and light source 2750 described above with respect to Figs. 74 and 75.

The light source 2750 of the step-up or running board may act as a hybrid source to provide both a direct and indirect lighting function. For example, the light source may illuminate the step-up or running board through the waveguide sections 2755 and 2760 (indirect lighting function) and may provide a puddle light to illuminate the underside of the vehicle through a lens positioned beneath the light source 2750 (direct lighting function).

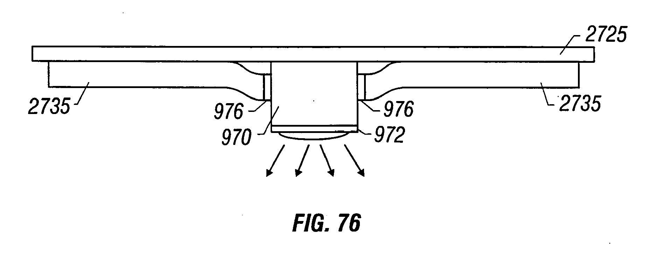

Alternatively, as shown in Fig. 76, the hybrid compact illuminator 970 of Fig. 25 may provide light for the step-up or running board through its waveguide outputs 976 (indirect lighting function) and may provide a puddle light through its lens output 972 (direct lighting function).

The waveguides used in the step-ups and running boards are configured to release or leak light along their length. The surfaces of the waveguide may be roughed or stippled for this purpose. In addition, diffusive material, such as diffusion tape, may be applied to the waveguide surfaces. The diffusion tape or other diffusive material may be tapered or shaped to provide a desired lighting distribution along the length of the waveguide. For example, the diffusive material may applied so that the light leakage increases gradually in the direction away from the light source. Such a configuration leads to a more uniform, aesthetic light distribution, since it tends to counteract any decrease in the amount of light available in the waveguide in the direction away from the light source.

The illuminated step-ups and running boards provide aesthetically pleasing and functional lighting effects for a vehicle. The optical waveguide configurations employed in these lighting assemblies provide several advantages. For example, the step-ups and running boards are illuminated along their lengths without the use of long, tubular light sources, such as neon or fluorescent tubes, that may be susceptible to failure and breakage. This feature is particularly important because the step-ups and running boards are located where they may suffer impacts as people enter or exit a vehicle. In addition, the waveguides may be formed from injection-molded plastic, extruded plastic or acrylic, resulting in increased durability and reduced manufacturing and installation cost compared to fiber optics or other types of light transmission conduits.

Interior Lighting

Another waveguide carries light from hybrid headlamp subsystem to the interior of the vehicle to provide, for example, dashboard lighting, dome lights, and reading lights. Waveguides also provide unique, aesthetically pleasing lighting effects for certain interior structures, such as cup holders, map pockets, and assist grips.

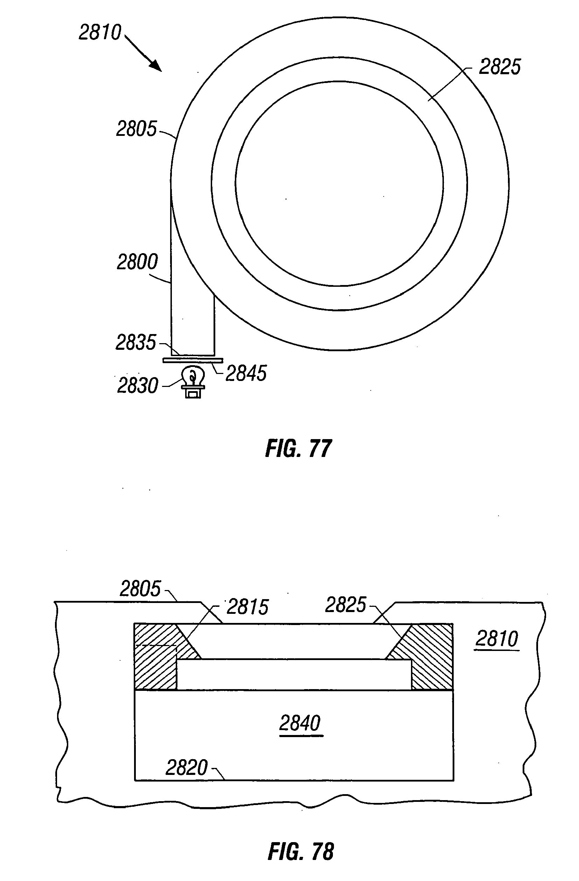

For example, as shown in Figs. 77 and 78, a ring-shaped waveguide element 2800 may be installed under the lip 2805 of a cup holder 2810. Although the shape of the waveguide 2800 in Figs. 77 and 78 is circular, any shape may be used depending upon the shape and size of the cup holder 2810. The efficiency of the waveguide may be improved by selecting a ratio of the inner radius (r) of the waveguide relative to the width (w) of the waveguide. For example, a waveguide with an inner radius to waveguide width ratio (r/w) of 3:1 will lose less light than a ratio of 1:1 or 0.1:1.

The waveguide 2800 may have a protruding, angled upper region 2815 to reflect and/or transmit light downward toward the bottom 2820 of the cup holder 2810. The upper surface 2825 of the angled portion 2815 may be stippled and may be covered with a layer of opaque material to prevent leakage of light in the upward direction. A small incandescent bulb 2830 at the input 2835 of the waveguide is used as a source. A colored filter 2845 may be placed between the source 2830 and the input 2835 to achieve a desired illumination color. When illuminated, the interior 2840 of the cup holder 2810 glows faintly so as not to interfere with the driver's vision. The glowing illumination allows the occupants of the vehicle to discern the location of the cup holder 2810. Light for the waveguide 2800 also may be provided by a waveguide 135 connected to one of the lighting subassemblies.

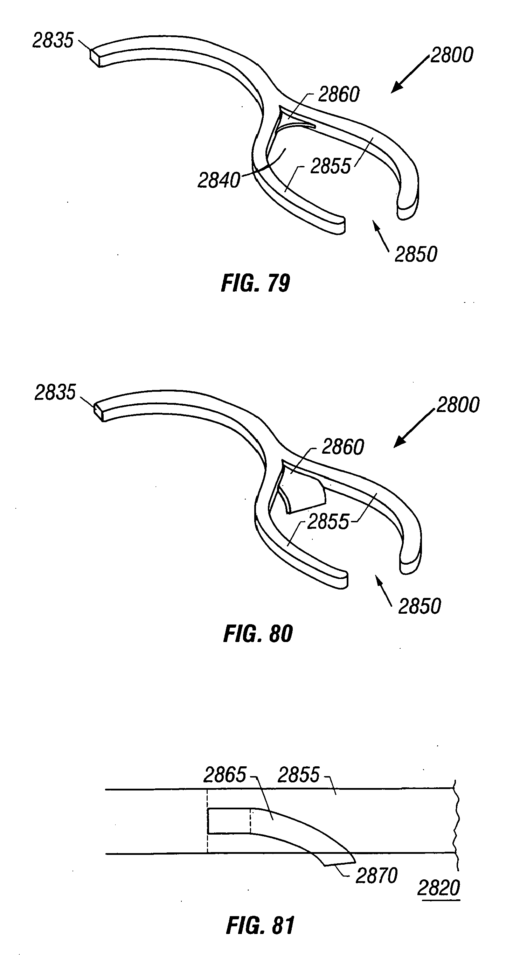

Another embodiment of the cup holder illumination waveguide 2800 is shown in Figs. 79 and 80. These "wishbone" shaped waveguides 2800 are configured for cup holders having a gap 2850 to accommodate a mug handle. Light for the waveguide 2800 enters the input 2835 and is split essentially equally to the two arms 2855 of the wishbone. The split in the waveguide 2800 may lead to a dark area in the illumination of the cup holder. Therefore, as shown in Fig. 79, a web portion 2860 is included between the two arms 2855. The web portion may be thinner than the rest of the waveguide 2800 to provide additional illumination to the portion of the interior 2840 of the cup holder directly beneath the split in the wishbone.

Alternatively, as shown in Fig. 80, a tab 2865 may extend downward from the split to reflect and/or transmit light toward the bottom of the cup holder. The tab 2865 has a generally rectangular cross-section and curves downward toward the bottom 2820 of the cup holder. The tab 2865 may be thinner than the rest of the waveguide 2800. As shown in Fig. 81, the tab 2865 also may have a chamfered leading edge 2870.

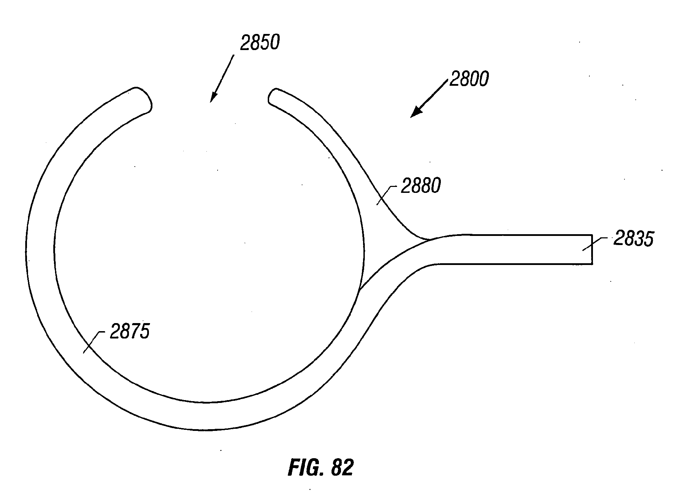

Yet another embodiment of the cup holder illumination waveguide 2800 is shown in Fig. 82. As in the previous embodiment, the waveguide 2800 is configured for cup holders having a gap 2850 to accommodate a mug handle. Light enters the input 2835 and is split unequally between a primary arm 2875 and a secondary arm 2880. The secondary arm has a smaller cross-section, (i.e., is thinner and narrower than the primary arm 2875). Since the secondary arm 2880 is shorter than the primary arm 2875, there is less loss along its length. The smaller cross-section of the secondary arm 2880 allows less light to enter the secondary arm, which balances the light in the two arms 2875 and 2880 provides uniform illumination around the circumference of the cup holder.

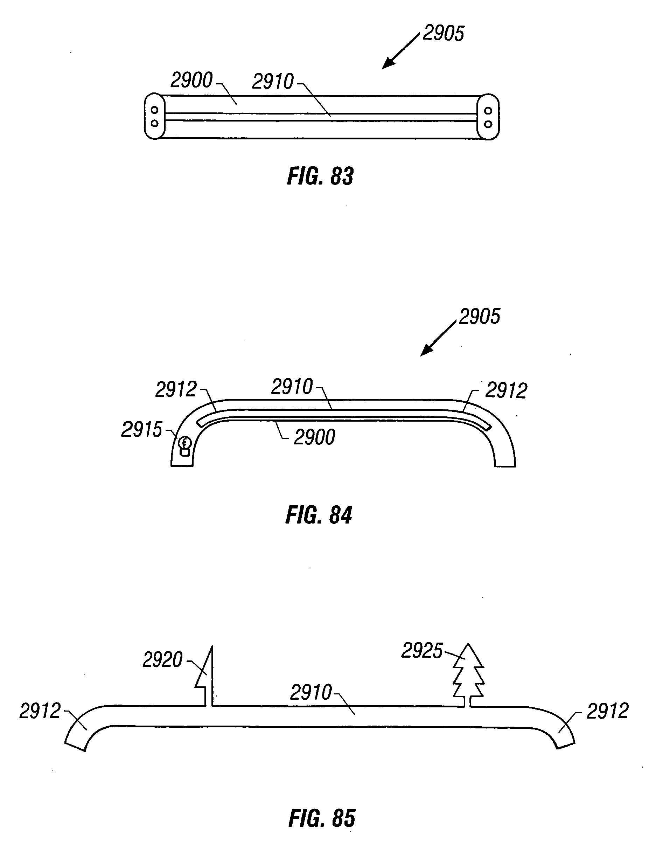

Similar structures may be used in the interior of a map pocket or, as shown in Figs. 83-85, along the interior surface 2900 of an assist grip 2905. A length of waveguide 2910 is installed along the inner surface 2900. The waveguide includes bends 2912 at the ends to conform to the shape of the assist grip. A small incandescent bulb 2915 provides a light source. The bulb may be used in conjunction with a lens (not shown) to provide a courtesy light. Alternatively, the assist grip 2905 may be connected by a waveguide to another light source in the DLS. As shown in Fig. 85, the waveguide 2910 may be formed with snaps 2920 and 2925 to ease installation into the assist grip 2905.

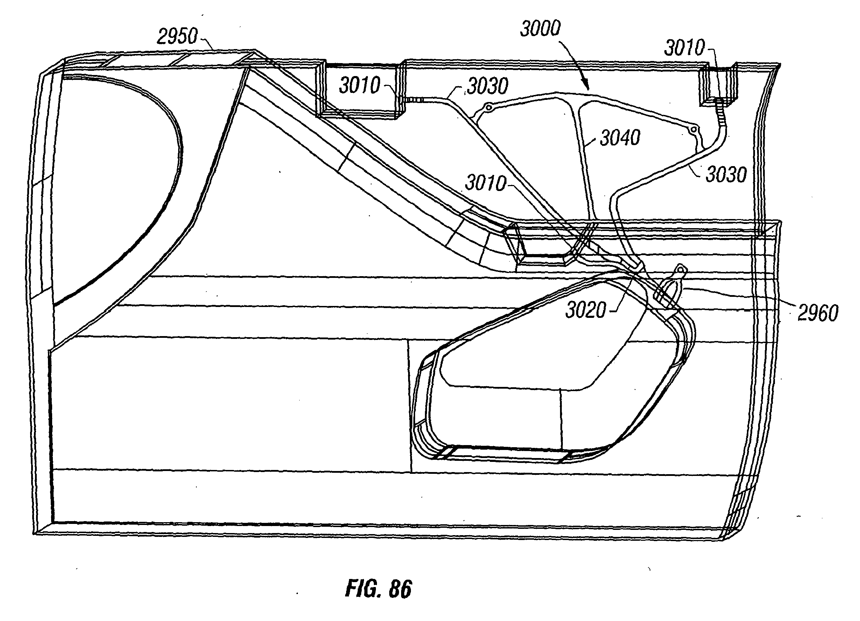

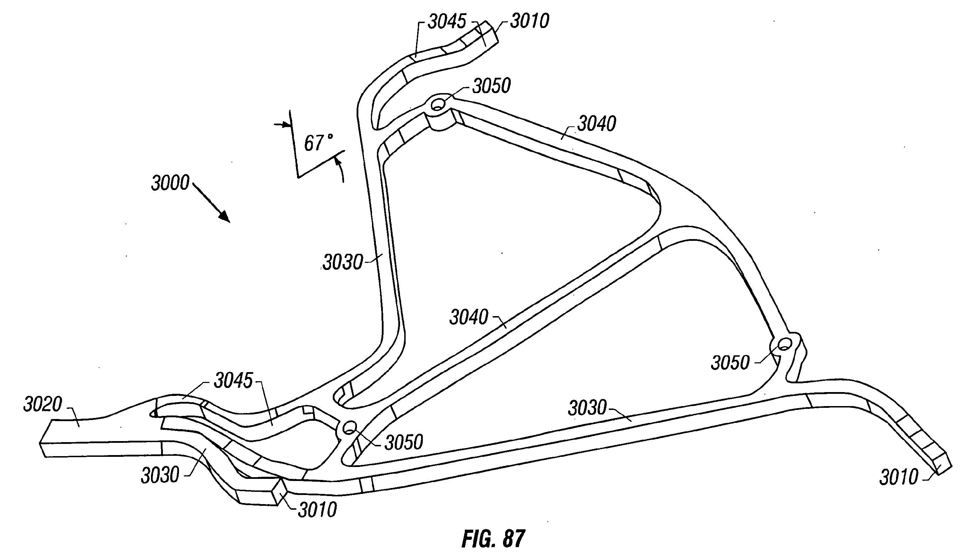

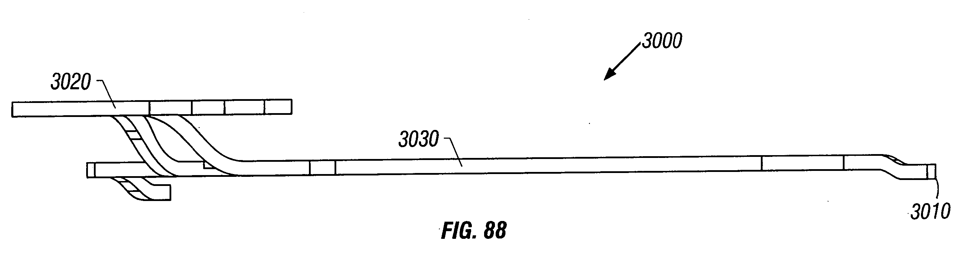

A DLS may be used in a vehicle door panel 2950, as shown in Fig. 86 at 3000, to distribute light from a light source 2960 to lighting outputs 3010 for the vehicle door. As shown in Figs. 87 and 88, a trunk waveguide 3020 splits light from the light source 2960 into branch waveguides 3030 that propagate the light to the lighting outputs 3010 of the door panel 2950.

A variety of output structures may be used at the lighting outputs 3010. For example, a waveguide may have a conical end portion (as shown in Fig. 31) with a lens element. A leaky waveguide bend (as shown in Fig. 35) also may

EP 1 659 027 A1

be used.

The waveguide assembly 3000 is supported on the door panel 2950 by an intersecting web of support arms 3040 that extend between the waveguides 3030. The support arms 3040 may be formed of the same material as the waveguides 3030 (e.g., injection molded plastic) and may be fabricated as a single unit. Alternatively, the support arms 3040 may be connected by an adhesive or may have integrated installation elements, such as snaps (as shown in Figs. 33 and 34).

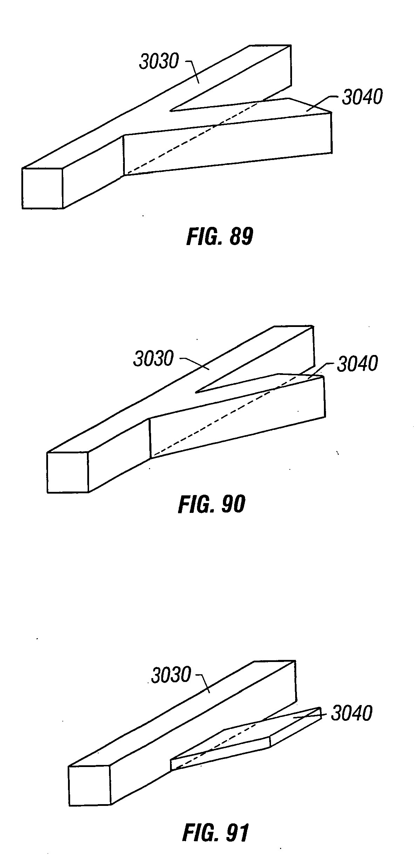

As shown in Fig. 89, the support arms 3040 may be approximately the same thickness (in the direction perpendicular to the plane of the door panel) and width (in a direction parallel to the plane of the door panel) as the waveguides 3030. Alternatively, the support arms 3040 may be narrower in width (Fig. 90) or thinner (Fig. 91) than the waveguides 3030 to minimize the amount of light entering the support arms 3040.

Referring again to Fig. 87, the support arms 3040 form an angle of about 67° with the branch waveguides 3030 (with respect to the direction the light is traveling) so that the amount of light entering the support arms 3040 is minimized. As discussed in "Analysis of Waveguide Geometries at Bends and Branches for the Directing of Light," waveguides with branch angles greater than 45° transmit only a small percentage of the light from the main branch. For example, a waveguide with a branch angle of 67.5° transmits approximately 1.3% of the light from the main branch.

The branch waveguides 3030 may include bends 3045 near the lighting outputs 3010 or at other points along the waveguides (e.g., near the trunk waveguide 3020) so that the waveguide assembly 3000 can conform to the shape of the door panel 2900. The bends 3045 have bend ratios greater than 3:1 to minimize undesirable light leakage. Such a configuration reduces unaesthetic light emissions from cracks or gaps in the door panel 2950 structure.

Installation holes 3050 are positioned along the support arms 3040 so that the waveguide assembly 3000 can be installed in the door panel 2950. Screws, posts or snaps may be used to hold the waveguide assembly 3000 in position on the door panel 2950.

The door panel DLS provides several advantages. For example, it eliminates the need for electrical wiring, multiple light bulbs, connectors, and PC boards, within the door panel. The single, high reliability light source in the DLS can meet all of the lighting requirements for particular door lighting functions. The source may be accessible through an access panel in the door, so that it can be easily replaced without removing the door panel. In addition, the light source may be located in another position within the vehicle, such as under the dashboard. Light may be carried from the light source to the door panel waveguide assembly through a waveguide, waveguide joint or optical fiber that passes from the vehicle body into the doors. Such a configuration reduces the electrical wiring required between the vehicle body and the doors, which reduces complexity and manufacturing costs. In addition, as discussed above, the door panel waveguide panel may be formed as a single piece of injection molded plastic, which further reduces manufacturing costs.

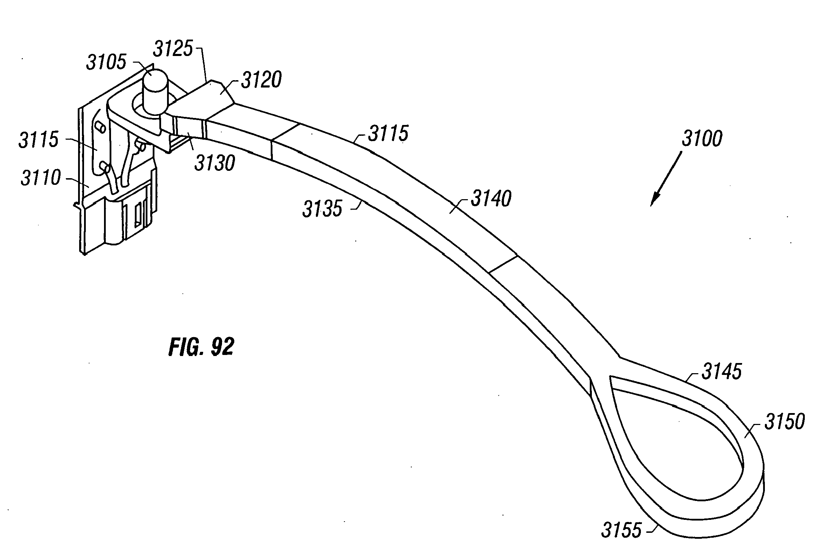

Referring to Fig. 92, a distributed lighting system (DLS) may be employed with an illuminated door handle for a vehicle to transmit light from a light source to various lighting output points, such as the inside of the handle and a button well surrounding the button. Different types of waveguide structures may be used in the DLS to transmit light from the light source to the lighting outputs points.

An illumination component 3100 has a light source 3105, such as a small incandescent bulb, mounted in a bracket 3110. Electrical power connections 3115 for the light source 3105 also are mounted on the bracket 3110. A handle waveguide 3115 having a collector element 3120 is connected to the bracket 3110 so that the input face 3125 of the collector 3120 is in proximity to the light source 3105. The input face 3125 has an area larger than the cross-section of the handle waveguide 3115 to increase the amount of light received from the light source 3105. The sides 3130 of the collector 3120 are angled or bevelled so that light entering the input face 3125 is reflected internally and enters the handle waveguide 3115.

The surfaces 3135 and 3140 of the handle waveguide 3115 may be roughened or stippled to cause light to leak from the bottom surface 3135 of the handle waveguide 3115 along its length. The top surface 3140 may be coated with a reflective coating or material, such as metal foil. A waveguide ring 3145 extends from the opposite end of the handle waveguide 3115. The surfaces of the waveguide ring also may be roughened or stippled to allow light to leak from the top surface 3150 of the ring waveguide 3145.

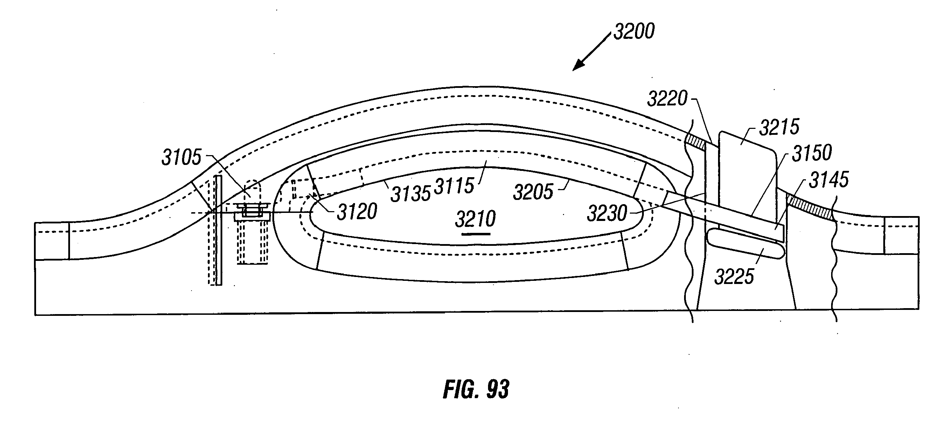

Referring to Fig. 93, the illumination component is installed in a vehicle door handle 3200. The handle waveguide 3115 is positioned in a slot or channel along the inside surface 3205 of the handle and releases light along the bottom surface 3135 of the waveguide, as discussed above, to illuminate the inside 3210 of the door handle.

A button 3215 is positioned in a well 3220 at one end of the handle 3200. The waveguide ring 3145 surrounds the button 3215 to provide illumination of the button 3215 and well 3220. However, the waveguide ring 3145 does not need to completely surround the button (i.e., the ring may have a gap). A lip portion 3225 along the bottom rim of the button 3215 reflects light out of the well 3220 to improve efficiency and the aesthetic characteristics of the illumination pattern.

Referring again to Fig. 92, the waveguide ring 3145 may use several mechanisms to release light in the well 3220. For example, the bottom surface 3155 of the ring may be stippled or roughened in a manner similar to the cup holder illuminator so that the light is reflected out of the well 3220. The bottom surface also may be coated with a reflective

21

coating or a reflective material, such as a metal foil. The walls 3230 of the well 3220 also may have a reflective coating.

In addition, the ring 3145 may have an inner bend radius to waveguide width ratio (r/w) of 1:1 or less, which will result in light leakage along the circumference of the ring. The light that escapes from the ring will illuminate the well 3220 and button 3215 and will be reflected by the lip portion 3225 of the button 3215 or by the walls 3230 of the well 3220. The ring 3145 may include a web portion or tab to improve the illumination pattern of the ring.

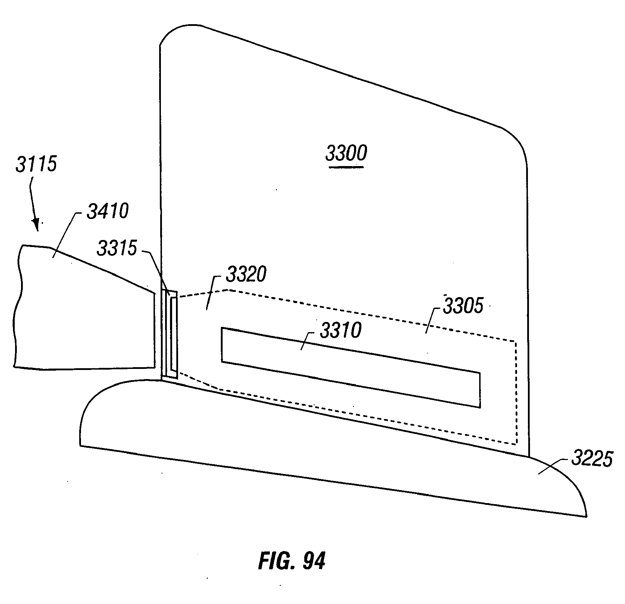

Alternatively, the button 3300, as shown in Fig. 94, may have a disk or ring-shaped internal waveguide 3305 positioned along the inner circumference of the button 3300. The internal waveguide 3305 releases light through slots 3310 in the sides of the button 3300. The button 3300 also has a waveguide port 3315 through which light can be received from a waveguide end portion 3410 of the handle waveguide 3115.

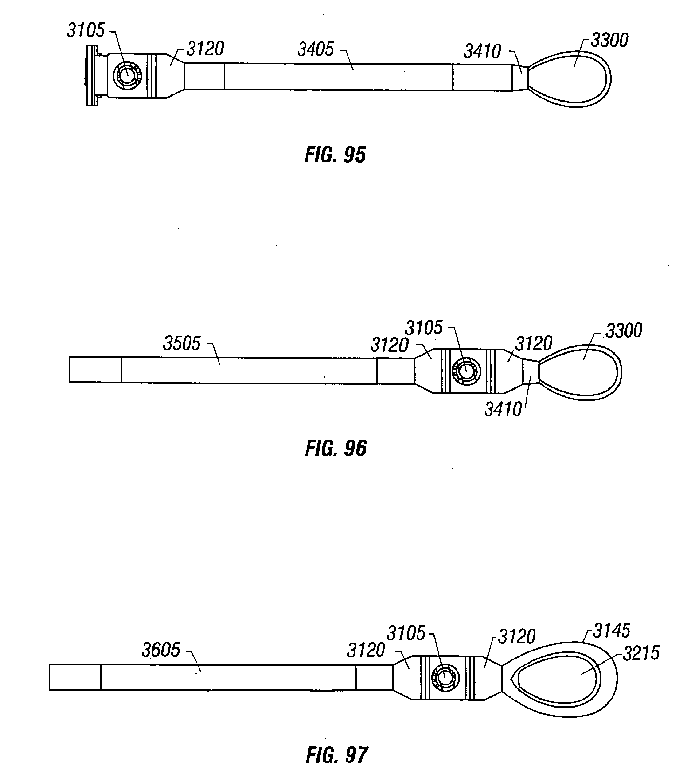

The handle waveguide 3405 shown in Fig. 95 is similar to the one discussed with respect to Figs. 92 and 93, except that it has a waveguide end portion 3410 rather than a waveguide ring 3145. The end portion 3410 may have a pinched end to improve the efficiency with which it delivers light to the interior of the button 3300. Likewise, the input portion 3320 of the interior waveguide 3305 also may have a pinched end. As in Fig. 93, the handle waveguide is positioned in a slot or channel to illuminate the inside portion of the handle.

As shown in Fig. 96, the handle waveguide 3505 may have a light source 3105 at the end nearest the button 3300, i.e., between the handle waveguide and the button. In this configuration, both the handle waveguide 3505 and the end portion 3410 have collector elements 3120 positioned in proximity to the light source 3105. As shown in Fig. 97, the configuration in which the light source 3105 is positioned between the handle waveguide 3605 and the button 3215 also may be used with a waveguide ring 3145, which is discussed above with respect to Figs. 92 and 93.

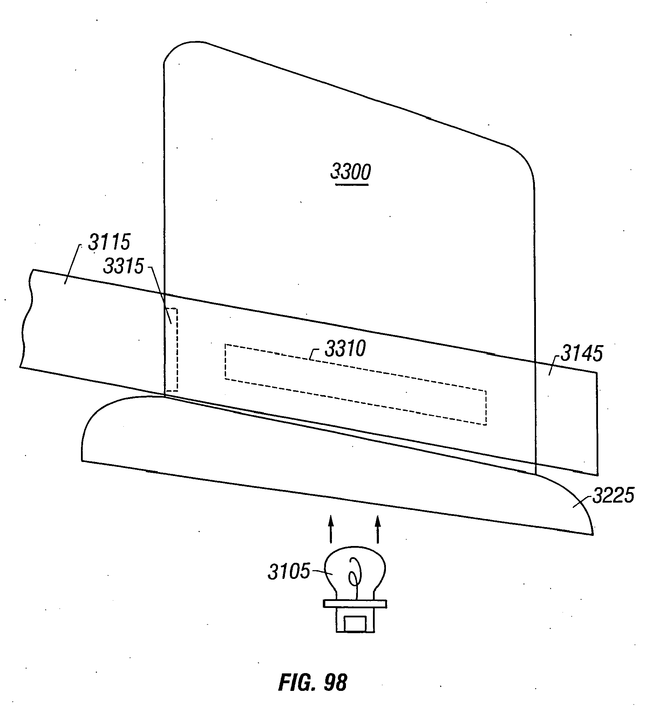

In an alternative configuration, as shown in Fig. 98, a light source 3105 may be positioned within the button 3300. Light from the light source 3105 is output through slots 3310 around the circumference of the button 3300. A waveguide ring 3145 may be positioned around the button 3300 to receive the light from the slots 3310 and distribute and reflect the light as discussed above with respect to Fig. 92. Light also may exit the button 3300 through a waveguide port 3315. Light from the waveguide port 3315 is received by a handle waveguide 3115, which extends from the ring portion as shown in Fig. 92.

The light source 3105 may be installed in the button 3300 in a configuration that does not include a ring waveguide. Light is output from the button 3300 through slots 3310 and is reflected by the walls 3230 of the well 3220 and by the lip portion 3225 of the button 3300. Light also may be output through the waveguide port 3315 and may be received by a handle waveguide in a manner similar to that shown in Fig. 94.

Other embodiments are within the scope of the following claims.

### Claims

1.  A vehicle headlamp comprising a beamforming waveguide formed from a block of solid of material, the waveguide having an input face, an output face, and a guide portion extending between the input face and the output face, a light source positioned at the input face of the beamforming waveguide, and a lens positioned at the output face so that light output by the beamforming waveguide passes through the lens to provide vehicle forward illumination.

2.  The vehicle headlamp of claim 1 **characterised in that** the guide portion has a uniform cross-section along a length of the guide portion from the input face to the output face.

3.  The vehicle headlamp of claim 1 or claim 2 **characterised in that** the guide portion comprises a top surface having a first stepped portion that forms a thickness profile to control an output beam pattern of the waveguide.

4.  The vehicle headlamp of claim 3 **characterised in that** the guide portion further comprises a second stepped portion and an inclined portion that forms a transition between the first stepped portion and the second stepped portion.

5.  The vehicle headlamp of claim 3 or claim 4 **characterised in that** the input and output faces of the waveguide are planar surfaces and each stepped portion is perpendicular to the input face and the output face.

6.  The vehicle headlamp of any one of claims 3 to 5 **characterised in that** the guide portion further comprises a planar bottom surface and two planar side surfaces extending between the bottom surface and the top surface, the side surfaces being perpendicular to the bottom surface and the stepped portion is parallel to the bottom surface.

7.  The vehicle headlamp of any one of claims 1 to 6 **characterised in that** the lens comprises ridges formed on a surface of the lens to limit an exit angle of light passing through the lens.

8. The vehicle headlamp of any one of claims 1 to 7 **characterised in that** a reflector is positioned between the output face and the lens.

9. The vehicle headlamp of any one of claims 1 to 8 **characterised in that** a reflector is positioned between the light source and the input face so that light from the light source reflects from the reflector and enters the input face.

10. A beamforming waveguide for a vehicle headlamp, the waveguide being formed from a solid block of material and having an input face, an output face, and a guide portion extending between the input face and the output face, the guide portion comprising
a top surface having a first stepped portion that forms a thickness profile to control an output beam pattern of the waveguide,
a second stepped portion, and
an inclined portion that forms a transition between the first stepped portion and the second stepped portion.

11. The beamforming waveguide of claim 10 **characterised in that** the guide portion has a uniform cross-section along a length of the guide portion from the input face to the output face.

12. The beamforming waveguide of claim 10 or claim 11 **characterised in that** the guide portion further comprises a planar bottom surface and two planar side surfaces extending between the bottom surface and the top surface, the side surfaces being perpendicular to the bottom surface and the first and second stepped portions are parallel to the bottom surface.

13. A vehicle headlamp comprising
a beamforming waveguide formed from a bundle of optical conduits, the waveguide having an input face, an output face, and a guide portion extending between the input face and the output face,
a light source positioned at the input face of the beamforming waveguide, and
a lens positioned at the output face so that light output by the beamforming waveguide passes through the lens to provide vehicle forward illumination.

14. The vehicle headlamp of claim 13 **characterised in that** the guide portion has a uniform cross-section along a length of the guide portion from the input face to the output face.

15. The vehicle headlamp of claim 13 or claim 14 **characterised in that** the conduits are arranged to form a top surface along the guide portion, the top surface having a first stepped portion that forms a thickness profile to control an output beam pattern of the waveguide.

16. The vehicle headlamp of any one of claims 13 to 15 **characterised in that** the lens comprises ridges formed on a surface of the lens to limit an exit angle of light passing through the lens.

17. A vehicle headlamp comprising
a light source configured to produce light,
a lens positioned to allow a portion of the light to pass through the lens to produce a headlamp beam,
a beamforming wedge moveable between a first position and
a second position, the wedge being formed from a piece of solid material, and
an actuator configured to move the wedge between the first position for producing a low beam and the second position for producing a high beam.

18. The vehicle headlamp of claim 17 **characterised in that** in the first position, the wedge is positioned in an area between the lens and the light source, and
in the second position, the wedge is essentially removed from the area between the lens and the light source.

19. The vehicle headlamp of claim 17 or claim 18 **characterised in that** the wedge has a triangular cross-section in a plane perpendicular to the lens.

20. The vehicle headlamp of any one of claims 17 to 19 **characterised in that** the wedge has a low beam portion and a high beam portion.

21. The vehicle headlamp of claim 20 **characterised in that** in the first position, the low beam portion of the wedge is positioned in an area between the lens and the light source, and in the second position, the high beam area of the wedge is positioned in the area between the lens and the light source.

22. The vehicle headlamp of claim 20 or claim 21 **characterised in that** the low beam portion of the wedge has a triangular cross-section in a plane perpendicular to the lens.

23. The vehicle headlamp of any one of claims 20 to 22 **characterised in that** the high beam portion varies in thickness across a surface thereof to produce a desired beam pattern.

24. The vehicle headlamp of any one of claims 20 to 22 **characterised in that** the high beam portion comprises facets on a surface thereof to produce a desired beam pattern.

**FIG. 1**

FIG. 2

FIG. 3

4.97
[0.20]

3.00
[0.12] 2.00
[0.08]

2.00
[0.081]

8.03
[0.32]

420

405

20.00
[0.79]

**FIG. 4**

3.50
[0.14]

26.6°

2.00
[0.08]

420

405

8.00
[0.31]

**FIG. 5**

205

425
405
420

415

**FIG. 6**

**FIG. 7**

**FIG. 8**

415

LOW BEAM

435

430

HIGH BEAM

415

435

430

**FIG. 9**

450

415

LOW BEAM

435

445
440

HIGH BEAM

415

435

450

445
440

**FIG. 10**

**FIG. 11**

ON

615 —— ———605

135

625

620

**FIG. 12**

OFF

605

135

615

620

**FIG. 13**

ON

610

135

**FIG. 14**

OFF

610

135

**FIG. 15**

*FIG. 16*

*FIG. 17*

135

220

130

135    220    705    710

220

135

**FIG. 18**

820

810    815

800

805

220

**FIG. 19**

Ø2.000

60.11
[2.366]

11.96
[0.471]

800

11.96
[0.471]

12.00
[0.472]

96.03
[3.781]

Ø2.000

87.60
[3.449]

800

810

68.54
[2.695]

**FIG. 20**

900

910

905

915

220

**FIG. 21**

**FIG. 22**

**FIG. 23**

**FIG. 24**

EP 1 659 027 A1

**FIG. 25**

1000

1010

1005

$\theta_i$

1015

**FIG. 26**

1100

1125

1105    1110

1115

1120

**FIG. 27**

1100

1125

1105    1110

1115

1120

1125

**FIG. 28**

1220    1205

1210

1200

1215

**FIG. 29**

**FIG. 30**

**FIG. 31**

**FIG. 32**

*1405*　*1420*　*1410*

*1400*

*1415*

*1410*

*1425*

*1430*

*1435*

**FIG. 33**

*1440*

*1445*

*1450*　*1455*

**FIG. 34**

*1500*　*1505*　*r*

*1510*

**FIG. 35**

FIG. 36

**FIG. 37**

1700

1720

1720

1720

1730

1770

1720

1740

1710

1750

**FIG. 38**

1720

1700

1720

1720

1760

1770

1730

1740

1720

**FIG. 39**

**FIG. 40**

**FIG. 41**

**FIG. 42**

**FIG. 43**

*1700*

*1720*

*1780*

*1790*

*1790*

*1790*

*1720*

*1790*

*1720*

*1790*

*1710*

*1720*

**FIG. 44**

**FIG. 45**

*1810*

*1810*

*1810*

*1800*

*1810*

*1830*

*1810*

**FIG. 46**

*1840*

*1800*

*1810*

*1830*

**FIG. 47**

**FIG. 48**

*FIG. 49*

**FIG. 50**

EP 1 659 027 A1

**FIG. 51**

**FIG. 52**

**FIG. 53**

FIG. 54

FIG. 55

FIG. 56

2205 2215 2205

2200

**FIG. 57**

2205 2215 2205

2290 2200

**FIG. 58**

2205

2320    2315
2300

2310

**FIG. 59**

2205

2320    2315
2330    2330    2300

2310

**FIG. 60**

**FIG. 61**

**FIG. 62**

FIG. 63

**FIG. 64**

**FIG. 65**

**FIG. 66**

**FIG. 67**

**FIG. 68**

**FIG. 69**

2730

2725

2735

2745

2748

2740

**FIG. 70**

2725

2745

2735

2740

**FIG. 71**

**FIG. 72**

**FIG. 73**

2730

2725

2745

2760

2755

2770

2735

2765

2770

2745

2750

2760

2735

**FIG. 74**

2725

2760

2765

2765

2755

2750

**FIG. 75**

**FIG. 76**

2810

2825

2805

2800

2835

2830 — 2845

**FIG. 77**

2805

2815

2825

2810

2840

2820

**FIG. 78**

2835

2860

2800

2840

2855

2850

**FIG. 79**

2835

2860

2800

2855

2850

**FIG. 80**

2865

2855

2870

2820

**FIG. 81**

*FIG. 82*

*2905*

*2900* *2910*

**FIG. 83**

*2905*

*2912* *2910* *2912*

*2915* *2900*

**FIG. 84**

*2920* *2925*

*2912* *2910* *2912*

**FIG. 85**

**FIG. 86**

EP 1 659 027 A1

FIG. 87

FIG. 88

3030

3040

**FIG. 89**

3030

3040

**FIG. 90**

3030

3040

**FIG. 91**

**FIG. 92**

EP 1 659 027 A1

**FIG. 93**

**FIG. 94**

3105  3120  3405  3410  3300

**FIG. 95**

3505  3105  3120  3300

3120  3410

**FIG. 96**

3605  3105  3145

3120  3120  3215

**FIG. 97**

3300

3115
3315

3310

3145

3225

3105

**FIG. 98**

**EP 1 659 027 A1**

**European Patent Office**

**EUROPEAN SEARCH REPORT**

Application Number

EP 06 00 2035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 711 949 A (NIPPON DENSO CO) 15 May 1996 (1996-05-15) * column 5, line 29 - column 6, line 20; figure 1 * ----- | 1-9, 13-16 | B60Q1/00 F21V8/00 G02B6/00 G02B6/00 F21S8/12 F21V14/06 |
| X | US 4 432 039 A (CIBIE PIERRE) 14 February 1984 (1984-02-14) * figure 2 * ----- | 10-12 | |
| X | US 4 868 718 A (DAVENPORT JOHN M ET AL) 19 September 1989 (1989-09-19) * column 3, line 65 - column 4, line 65; figures 3,4 * ----- | 17-24 | |

|  |  |
|---|---|
|  | TECHNICAL FIELDS SEARCHED (IPC) B60Q F21V G02B F21S |

The present search report has been drawn up for all claims

| Place of search | Date of completion of the search | Examiner |
|---|---|---|
| Munich | 7 March 2006 | Lord, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 2035

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2006

| Patent document cited in search report | | Publication date | Patent family member(s) | | Publication date |
|---|---|---|---|---|---|
| EP 0711949 | A | 15-05-1996 | DE | 69518603 D1 | 05-10-2000 |
| | | | DE | 69518603 T2 | 03-05-2001 |
| | | | JP | 8138408 A | 31-05-1996 |
| | | | US | 5730519 A | 24-03-1998 |
| US 4432039 | A | 14-02-1984 | DE | 3236683 A1 | 21-04-1983 |
| | | | ES | 275442 U | 16-02-1984 |
| | | | FR | 2514105 A1 | 08-04-1983 |
| | | | GB | 2107843 A | 05-05-1983 |
| | | | IT | 1152690 B | 07-01-1987 |
| | | | JP | 58071501 A | 28-04-1983 |
| US 4868718 | A | 19-09-1989 | CA | 2007150 A1 | 13-09-1990 |
| | | | DE | 4006938 A1 | 20-09-1990 |
| | | | FR | 2644120 A1 | 14-09-1990 |
| | | | GB | 2229263 A | 19-09-1990 |
| | | | JP | 2060616 C | 10-06-1996 |
| | | | JP | 3004401 A | 10-01-1991 |
| | | | JP | 7093044 B | 09-10-1995 |
| | | | NL | 8902762 A | 01-10-1990 |

EPO FORM P0459

For more details about this annex : see Official Journal of the European Patent Office, No. 12/82